(19) Europäisches Patentamt
European Patent Office
Office européen des brevets

(11) **EP 4 465 484 A1**

(12) **EUROPEAN PATENT APPLICATION**
published in accordance with Art. 153(4) EPC

(43) Date of publication:
**20.11.2024 Bulletin 2024/47**

(21) Application number: **22920670.1**

(22) Date of filing: **28.12.2022**

(51) International Patent Classification (IPC):
***H02J 50/60*** *(2016.01)* ***H02J 7/00*** *(2006.01)*
***H02J 50/12*** *(2016.01)* ***H02J 50/20*** *(2016.01)*
***H02J 50/30*** *(2016.01)* ***H02J 50/80*** *(2016.01)*

(52) Cooperative Patent Classification (CPC):
**H02J 7/00; H02J 50/12; H02J 50/20; H02J 50/30; H02J 50/60; H02J 50/80**

(86) International application number:
**PCT/JP2022/048455**

(87) International publication number:
**WO 2023/136154 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 JP 2022004544**

(71) Applicant: **CANON KABUSHIKI KAISHA**
**Tokyo 146-8501 (JP)**

(72) Inventor: **HIRAMATSU, Tomoki**
**Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **POWER TRANSMISSION DEVICE, POWER RECEPTION DEVICE, WIRELESS POWER TRANSMISSION SYSTEM, METHOD FOR CONTROLLING POWER TRANSMISSION DEVICE, METHOD FOR CONTROLLING POWER RECEPTION DEVICE, AND PROGRAM**

(57) When a power receiving apparatus satisfies a predetermined condition, the timeout period related to calculation of a reference value of power loss is set to a timeout period greater than when the power receiving apparatus does not satisfy the predetermined condition.

FIG. 3

102
301
POWER SUPPLY UNIT
302
POWER TRANSMISSION UNIT
305
303
306
300
CONTROL UNIT
304
COMMUNICATION UNIT
307
MEMORY
308
TIMER

EP 4 465 484 A1

## Description

### Technical Field

The present disclosure relates to a power transmitting apparatus, a power receiving apparatus, a wireless power transmission system, a method for controlling a power transmitting apparatus, a method for controlling a power receiving apparatus, and a program.

### Background Art

In recent years, the technology for a wireless power transmission system has been widely developed, and a standard (WPC standard) has been developed by the Wireless Power Consortium (WPC), which is the standardization organization responsible for wireless charging. PTL 1 discloses a power transmitting apparatus and a power receiving apparatus compliant with the WPC standard.

In addition, when an object different from a power receiving apparatus and a power transmitting apparatus (hereinafter referred to as a "foreign object") is present within the range the power transmitting apparatus can transmit power, it is essential for a wireless power transmission system to detect the foreign object and control power transmission and reception. PTL 2 discloses a technique for detecting a foreign object if the foreign object is present in the vicinity of a power transmitting apparatus or a power receiving apparatus and regulating power transmission or power reception. Furthermore, PTL 3 discloses a technique for applying a high-frequency signal to a power transmitting coil of a wireless power transmission system for a certain time period, measuring the Q-value (quality factor) from a time change in the voltage inside the power transmitting coil, and detecting a foreign object using the change in Q-value.

### Citation List

### Patent Literature

PTL 1: Japanese Patent Laid-Open No. 2015-56959
PTL 2: Japanese Patent Laid-Open No. 2017-70074
PTL 3: Japanese Patent Laid-Open No. 2018-45845

### Summary of Invention

### Technical Problem

Among methods for detecting a foreign object, a method using power loss can be employed. A reference value of power loss when no foreign object is present between a power transmitting apparatus and a power receiving apparatus is first calculated in advance from the difference between the transmitted power at the power transmitting apparatus and the received power at the power receiving apparatus. Then, it is determined whether a foreign object is present on the basis of power loss between the power transmitting apparatus and the power receiving apparatus calculated during subsequent power transmission. In this case, when the reference value of power loss in the absence of a foreign object is calculated in advance, it is desirable to detect a foreign object using, for example, a different method each time the power loss is calculated in order to avoid calculation in the presence of a foreign object. In addition, to improve the accuracy of the calculation of the reference value of power loss, multiple trials of the calculation of power loss and the detection of foreign object can be conducted. However, a predetermined timeout period is set for a process related to the calculation of the reference value of power loss. For this reason, if multiple trials are conducted to calculate the reference value of power loss and detect a foreign object at each calculation, the process may not complete within the timeout period, resulting in unintended power transmission outage.

In view of the above-described problems, it is an object of the present disclosure to prevent unnecessary power transmission outage that may occur when calculation of a reference value of power loss used to detect an object different from a power receiving apparatus and a power transmitting apparatus is performed multiple times. Solution to Problem

A power transmitting apparatus according to the present disclosure wirelessly transmits power to a power receiving apparatus. The power transmitting apparatus includes first detection means for detecting whether an object different from the power transmitting apparatus and the power receiving apparatus is present based on power loss between the power transmitting apparatus and the power receiving apparatus, acquisition means for acquiring capability information regarding the power receiving apparatus from the power receiving apparatus, second detection means for detecting whether an object different from the power transmitting apparatus and the power receiving apparatus is present based on a Q-factor measured during a time period during which the power transmission is stopped, calculation means for calculating a reference value of power loss when the object different from the power transmitting apparatus and the power receiving apparatus is not present based on a detection result of the second detection means, where the reference value is used for the detection performed by the first detection means, and identification means for identifying a timeout period for processing regarding calculation of the reference value by the calculation means based on the capability information regarding the power receiving apparatus acquired by the acquisition means. When the power receiving apparatus does not satisfy a predetermined condition, the identification means selects a first value as the timeout period and, when the power receiving apparatus satisfies the predetermined condition, the identification means selects a second value that is greater than the first value as the timeout period. Advantageous Effects of Invention

According to the present disclosure, unnecessary power transmission outage can be prevented that may occur when a reference value of power loss used to detect an object different from a power receiving apparatus and a power transmitting apparatus is calculated.

Brief Description of Drawings

[Fig. 1] Fig. 1 illustrates an example of the configuration of a wireless power transmission system according to an embodiment.

[Fig. 2] Fig. 2 is a block diagram of an example of the internal configuration of a power receiving apparatus according to the embodiment.

[Fig. 3] Fig. 3 is a block diagram of an example of the internal configuration of a power transmitting apparatus according to the embodiment.

[Fig. 4] Fig. 4 is a block diagram of an example of the functional configuration of the power transmitting apparatus according to the embodiment.

[Fig. 5] Fig. 5 is a flowchart of an example of the basic processing procedure performed by the power transmitting apparatus according to a first embodiment.

[Fig. 6] Fig. 6 is a flowchart of an example of the timeout period selection processing procedure performed by the power transmitting apparatus according to the first embodiment.

[Fig. 7] Fig. 7 illustrates the sequence of operations performed by the power transmitting apparatus and the power receiving apparatus according to the first embodiment.

[Fig. 8] Fig. 8 is a flowchart of an example of the basic processing procedure performed by a power receiving apparatus according to a second embodiment.

[Fig. 9] Fig. 9 is a flowchart illustrates an example of the processing procedure for selecting the maximum RP packet transmission time interval performed by the power receiving apparatus according to the second embodiment.

[Fig. 10] Fig. 10 illustrates the sequence of operations performed by a power transmitting apparatus and the power receiving apparatus according to the second embodiment.

[Fig. 11] Fig. 11 illustrates a foreign object detection method based on a power loss technique.

[Fig. 12A] Fig. 12A illustrates a foreign object detection method based on a Q-value measurement method in the time domain.

[Fig. 12B] Fig. 12B illustrates the foreign object detection method based on the Q-value measurement method in the time domain.

Description of Embodiments

(First embodiment)

Embodiments are described in detail below with reference to the accompanying drawings. Note that the embodiments described below are not intended to limit the present disclosure. Although a plurality of features are described in the embodiments, not all of the plurality of features may be essential to the present disclosure, and the plurality of features may be combined in any way. Furthermore, in the accompanying drawings, the same or similar configurations are identified by the same reference numerals, and duplicate descriptions are omitted.

(Configuration of System)

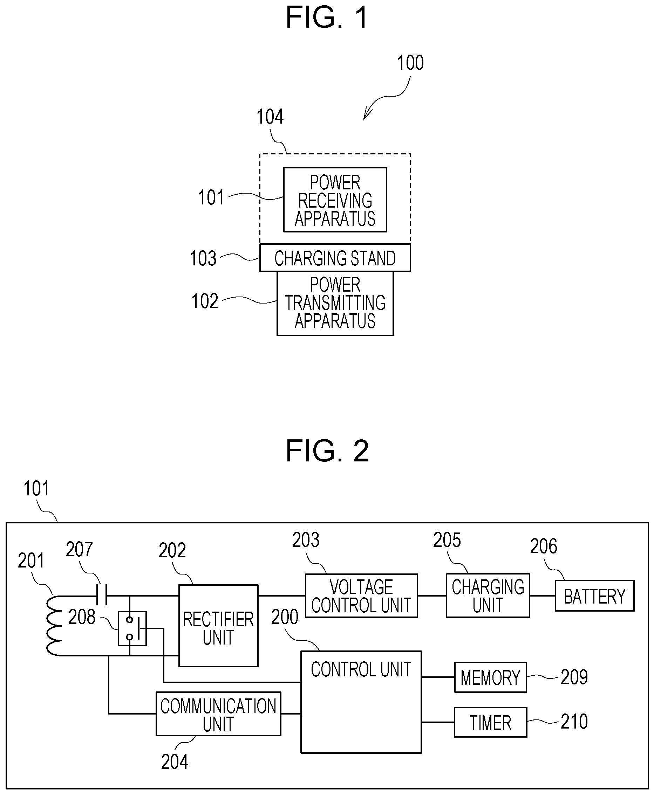

Fig. 1 illustrates an example of the configuration of a contactless charging system (wireless power transmission system) 100 according to the present embodiment. As illustrated in Fig. 1, the contactless charging system according to the present embodiment includes a power receiving apparatus 101 and a power transmitting apparatus 102. The power receiving apparatus 101 and the power transmitting apparatus 102 are compliant with the WPC (Wireless Power Consortium) standard.

The power receiving apparatus 101 is an electronic device that receives power from the power transmitting apparatus 102 and charges a built-in battery. The power transmitting apparatus 102 is an electronic device that wirelessly transmits power to the power receiving apparatus 101 that is placed via a charging stand 103. Hereinafter, for simplicity, the expression "placed on the power transmitting apparatus 102" is used to refer to "placed on the charging stand 103". A range 104 indicates the range within which the power receiving apparatus 101 can receive the power transmitted from the power transmitting apparatus 102. The power receiving apparatus 101 and the power transmitting apparatus 102 have a function of running an application other than contactless charging. In the description below, the term "foreign object" refers to an object that is included in the transmission range of the power transmitting apparatus 102 and that is other than the power transmitting apparatus 102 and the power receiving apparatus 101. An example of a foreign object is a paper clip or an IC card. Any one of the power receiving apparatus 101, the power transmitting apparatus 102 and, among objects in an essential portion of a product including the power receiving apparatus 101 or the power transmitting apparatus 102, an object that may unintentionally generate heat when exposed to wireless power transmitted by a power transmitting antenna is not a foreign object.

In the description below, the meaning of the expression "the power receiving apparatus 101 is placed on the power transmitting apparatus 102" is the same as the meaning of the expression "the power receiving apparatus 101 is included in a power transmittable range of the power transmitting apparatus 102". The power transmittable range of the power transmitting apparatus 102 is the range within which the power can be transmitted to the power receiving apparatus 101 by using a power transmitting coil. When the power receiving apparatus 101 is placed on the power transmitting apparatus 102, the power receiving apparatus 101 is not necessarily in contact with the power transmitting apparatus 102. For example, if the power receiving apparatus 101 is included in the power transmittable range without being in contact with the power transmitting apparatus 102, it is considered that the power receiving apparatus 101 is placed on the power transmitting apparatus 102. Alternatively, a configuration can be employed in which the power receiving apparatus 101 is not placed on top of the power transmitting apparatus 102 but is placed, for example, on a side surface of the power transmitting apparatus 102.

(Configurations of Power Transmitting Apparatus and Power Receiving Apparatus)

The configurations of the power receiving apparatus 101 and the power transmitting apparatus 102 according to the present embodiment are described below. Note that the configuration described below is only an example, and some (or all in some cases) of the described configurations may be replaced with other configurations that perform similar functions or may be removed. Further configurations may be added to the described configurations. Furthermore, one block in the following description may be divided into multiple blocks, or multiple blocks in the following description may be integrated into a single block.

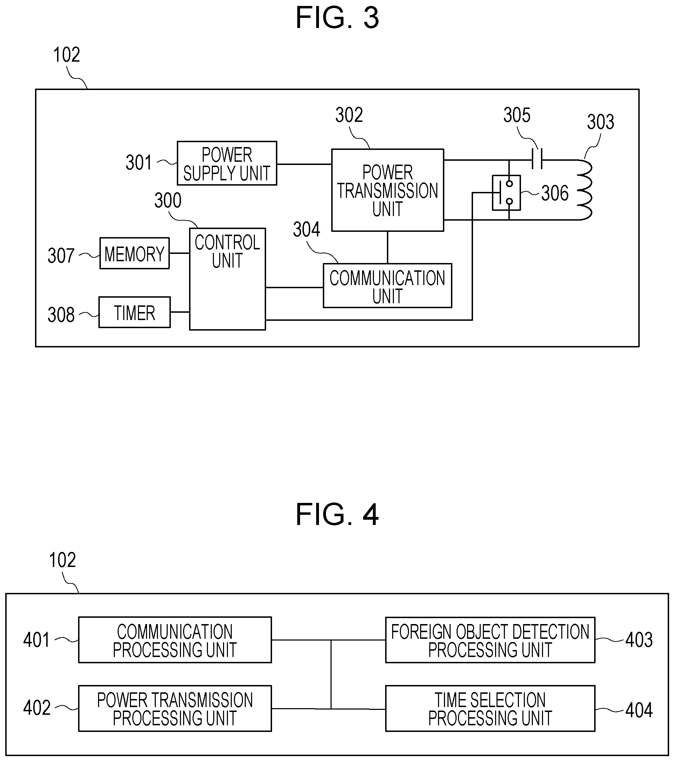

Fig. 2 is a block diagram of an example of the internal configuration of the power receiving apparatus 101 according to the present embodiment. Fig. 3 is a block diagram of an example of the internal configuration of the power transmitting apparatus 102 according to the present embodiment. The power receiving apparatus 101 includes a control unit 200, a power receiving coil 201, a rectifier unit 202, a voltage control unit 203, a communication unit 204, a charging unit 205, a battery 206, a resonant capacitor 207, a switch 208, a memory 209, and a timer 210.

The control unit 200 performs overall control of the power receiving apparatus 101 by executing a control program stored in, for example, the memory 209. The control unit 200 may also control the execution of an application other than wireless power transmission. The control unit 200 includes one or more processors, such as a CPU (Central Processing Unit) or an MPU (Micro Processing Unit). The control unit 200 may further include hardware dedicated to specific processing, such as an application-specific integrated circuit (ASIC). The control unit 200 may include an array circuit, such as a field programmable gate array (FPGA), compiled to perform predetermined processing. The control unit 200 stores, in the memory 209, information to be stored while performing a variety of processes. The control unit 200 also measures time intervals using the timer 210.

The power receiving coil 201 receives power from a power transmitting coil 303 of the power transmitting apparatus 102. The power receiving coil 201 is connected to the resonant capacitor 207 and resonates at a specific frequency F2. The rectifier unit 202 converts an AC voltage and an AC current received from the power transmitting coil 303 via the power receiving coil 201 into a DC voltage and a DC current, respectively. The voltage control unit 203 converts the level of the DC voltage input from the rectifier unit 202 into the level of a DC voltage at which the control unit 200, the charging unit 205, and the like can operate.

The communication unit 204 controls communication based on the WPC standard with the power transmitting apparatus 102 using In-band communication. The communication unit 204 performs communication with the power transmitting apparatus 102 by demodulating electromagnetic waves input from the power receiving coil 201 to obtain information transmitted from the power transmitting apparatus 102 and by load modulating the electromagnetic waves to superimpose information to be transmitted to the power transmitting apparatus 102 on the electromagnetic waves. That is, the communication performed by the communication unit 204 is superimposed on the power transmission from the power transmitting coil 303 of the power transmitting apparatus 102. Thus, the communication is performed.

The battery 206 provides the power necessary for control, power reception, and communication performed by the power receiving apparatus 101. The battery 206 stores the power received via the power receiving coil 201. The switch 208 is a switch used to short-circuit the power receiving coil 201 and the resonant capacitor 207 and is controlled by the control unit 200. When the switch 208 is turned on, the power receiving coil 201 and the resonant capacitor 207 form a series resonant circuit. At this time, a current flows only in a closed circuit formed by the power receiving coil 201, the resonant capacitor 207, and the switch 208, and no current flows in the rectifier unit 202 and the voltage control unit 203. When the switch 208 is turned off, a current flows in the rectifier unit 202 and the voltage control unit 203 via the power receiving coil 201 and the resonant capacitor 207.

The memory 209 stores various types of information as described above. The memory 209 may store information obtained by a functional unit different from the control unit 200. The timer 210 performs a timekeeping operation using, for example, a count-up timer that measures elapsed time from the time the timer 210 is activated or a count-down timer that counts down a set amount of time.

An example of the internal configuration of the power transmitting apparatus 102 according to the present embodiment is described below with reference to Fig. 3. The power transmitting apparatus 102 includes a control unit 300, a power supply unit 301, a power transmission unit 302, a power transmitting coil 303, a communication unit 304, a resonant capacitor 305, a switch 306, a memory 307, and a timer 308.

The control unit 300 performs overall control of the power transmitting apparatus 102 by executing a control program stored in, for example, the memory 307. The control unit 300 may control the execution of an application other than wireless power transmission. The control unit 300 includes one or more processors, such as a CPU or an MPU. The control unit 300 may include hardware dedicated to specific processing, such as an application-specific integrated circuit (ASIC) and an array circuit, such as an FPGA, compiled to perform predetermined processing. The control unit 300 stores, in the memory 307, information to be stored while performing a variety of processes. The control unit 300 also performs a timekeeping operation using the timer 308.

The power supply unit 301 provides the power necessary for control, power transmission, and communication to the entire power transmitting apparatus 102. An example of the power supply unit 301 is a commercial power source or a battery.

The power transmission unit 302 converts the DC or AC power input from the power supply unit 301 into AC frequency power in the frequency band used for wireless power transmission and outputs the AC frequency power to the power transmitting coil 303, thus generating electromagnetic waves to be received by the power receiving apparatus 101. The frequency of the AC power generated by the power transmission unit 302 is about several hundred kHz (for example, 110 kHz to 205 kHz). The power transmission unit 302 outputs the AC frequency power to the power transmitting coil 303 on the basis of an instruction from the control unit 300 so that the power transmitting coil 303 outputs electromagnetic waves for transmitting power to the power receiving apparatus 101. The power transmission unit 302 controls the intensity of the electromagnetic waves to be output by adjusting the voltage (power transmission voltage) or current (power transmission current) input to the power transmitting coil 303. The intensity of the electromagnetic waves increases with increasing power transmission voltage or power transmission current, while the intensity of the electromagnetic waves decreases with decreasing power transmission voltage or power transmission current. The power transmission unit 302 controls the output of AC frequency power on the basis of an instruction from the control unit 300 so that power transmission from the power transmitting coil 303 is started or stopped. The power transmitting coil 303 is connected to the resonant capacitor 305 and resonates at a specific frequency F1.

The communication unit 304 uses In-band communication and controls communication based on the WPC standard with the power receiving apparatus 101. The communication unit 304 modulates electromagnetic waves output from the power transmitting coil 303 to transmit information to the power receiving apparatus 101. In addition, the communication unit 304 demodulates the electromagnetic waves output from the power transmitting coil 303 and modulated by the power receiving apparatus 101 to obtain information transmitted by the power receiving apparatus 101. That is, the communication performed by the communication unit 304 is superimposed on the power transmission from the power transmitting coil 303.

The switch 306 is a switch for causing short-circuiting between the power transmitting coil 303 and the resonant capacitor 305 and is controlled by the control unit 300. When the switch 306 is turned on, the power transmitting coil 303 and the resonant capacitor 305 form a series resonant circuit. At this time, a current flows only in the closed circuit formed by the power transmitting coil 303, the resonant capacitor 305, and the switch 306. When the switch 306 is turned off, the power transmitting coil 303 and the resonant capacitor 305 are supplied with power from the power transmission unit 302. As described above, the memory 307 stores various types of information. The memory 307 may store information acquired by a functional unit different from the control unit 300. The timer 308 performs a timekeeping operation using, for example, a count-up timer that measures elapsed time from the time the timer 308 is activated or a count-down timer that counts down a set amount of time.

The function of the control unit 300 of the power transmitting apparatus 102 is described with reference to Fig. 4. Fig. 4 is a block diagram of an example of the functional configuration of the control unit 300 of the power transmitting apparatus 102. The power transmitting apparatus 102 includes a communication processing unit 401, a power transmission processing unit 402, a foreign object detection processing unit 403, and a time selection processing unit 404. The function of each of the processing units is realized in the form of a program running in the control unit 300. In addition, each of the processing units is configured as an independent program, which operates in parallel with the other processing units while synchronizing with one another by event processing or the like.

The communication processing unit 401 controls communication based on the WPC standard with the power receiving apparatus 101 via the communication unit 304. The power transmission processing unit 402 controls the power transmission unit 302 to control power transmission to the power receiving apparatus 101.

The foreign object detection processing unit 403 detects a foreign object by measuring the power loss between the power transmitting apparatus and the power receiving apparatus and the Q-value in the power transmitting coil 303. The foreign object detection processing unit 403 performs a foreign object detection method using the power loss technique expected in the WPC standard and a foreign object detection method using the Q-value. Alternatively, the foreign object detection processing unit 403 may perform a foreign object detection process using another method. For example, the power transmitting apparatus 102 having an NFC (Near Field Communication) communication function may perform a foreign object detection process using a facing device detection function based on the NFC standard. Aside from the two foreign object detection methods described above, the foreign object detection processing unit 403 can perform foreign object detection based on the Q-value measurement method in the time domain. Furthermore, as a function other than the foreign object detecting function, the foreign object detection processing unit 403 can detect a change in the state on the power transmitting apparatus 102. For example, the foreign object detection processing unit 403 can detect an increase or a decrease in the number of power receiving apparatuses on the power transmitting apparatus 102.

The time selection processing unit 404 selects the timeout period related to processing in a Calibration phase (described below). According to the present embodiment, the timeout period is selected on the basis of information as to whether the power receiving apparatus 101 is capable of performing foreign object detection based on the Q-value measurement method in the time domain and the number of trials of foreign object detect based on the Q-value measurement method in the time domain, for example. The process of selecting a timeout period is described in detail below.

According to the present system, wireless power transmission using electromagnetic induction for contactless charging is performed based on the WPC standard. More specifically, the power receiving apparatus 101 and the power transmitting apparatus 102 perform wireless power transmission for contactless charging based on the WPC standard between the power receiving coil 201 of the power receiving apparatus 101 and the power transmitting coil 303 of the power transmitting apparatus 102. According to the present embodiment, the wireless power transmission method (contactless power transmission method) is not limited to the method defined in the WPC standard, but may be any other method using electromagnetic induction, magnetic field resonance, electric field resonance, microwaves, laser, or the like.

According to the present embodiment, wireless power transmission is used for contactless charging, but wireless power transmission may be employed for applications other than contactless charging.

According to the WPC standard, the amount of power that the power receiving apparatus 101 is guaranteed to receive from the power transmitting apparatus 102 is defined by a value called Guaranteed Power (hereinafter referred to as "GP"). The GP indicates a power value that is guaranteed to be output to a load, such as a circuit for charging, in the power receiving apparatus 101 even if the transmission efficiency between the power receiving coil 201 and the power transmitting coil 303 decreases due to, for example, a change in the positional relationship between the power receiving apparatus 101 and the power transmitting apparatus 102. For example, in the case of the GP being 15 watts, even if the transmission efficiency decreases due to a change in the positional relationship between the power receiving coil 201 and the power transmitting coil 303, the power transmitting apparatus 102 performs control so that a power of 15 watts can be output to the load in the power receiving apparatus 101 and transmits the power. The GP is determined by negotiation between the power receiving apparatus 101 and the power transmitting apparatus 102.

The WPC standard also specifies a method for the power transmitting apparatus 102 to detect the presence of an object that is not a power receiving apparatus (a foreign object) around the power transmitting apparatus 102 (in the vicinity of the receiving antenna). More precisely, a method is first specified for detecting a foreign object by a change in the quality factor (Q-value, Q-factor) of the power transmitting antenna (the power transmitting coil) 303 in the power transmitting apparatus 102 (the foreign object detection method using Q-value). The WPC standard also specifies a power loss technique for detecting a foreign object using the difference between the transmitted power of the power transmitting apparatus 102 and the received power of the power receiving apparatus 101. The foreign object detection process using the Q-value is performed before power is transmitted. In addition, the foreign object detection process using the power loss technique is performed during power transmission on the basis of data obtained in a calibration process (described below) performed before. The details are described below.

To constitute the power receiving apparatus 101 (and a product in which the power receiving apparatus 101 is incorporated) or the power transmitting apparatus 102 (and a product in which the power transmitting apparatus 102 is incorporated), certain metal parts are essential. The essential metal parts include metal parts that may unintentionally generate heat when exposed to the wireless power transmitted by the power transmitting coil 303. For example, the metal parts that unintentionally generate heat include a metal frame around the power transmitting coil 303 or the power receiving coil 201. According to the present embodiment, the term "foreign object" refers to an object excluding such metal parts among metals that may generate heat when exposed to the wireless power transmitted by the power transmitting coil. That is, a foreign object is an object that is not any one of the power receiving apparatus, part of a product that incorporates the power receiving apparatus, the power transmitting apparatus, and part of a product that incorporates the power transmitting apparatus and that may generate heat when exposed to the wireless power transmitted by the power transmitting coil. For example, a paper clip, an IC card, and the like are foreign objects.

Before performing power transmission, the power receiving apparatus 101 and the power transmitting apparatus 102 according to the present embodiment communicate with each other for power transmission/reception control based on the WPC standard and for device authentication. The communication for power transmission and reception control based on the WPC standard is described below.

The WPC standard defines multiple phases including a Power Transfer phase in which power transmission is performed and a phase before the power transmission is actually performed and, in each phase, communication for power transmission and reception control necessary for the phase is performed. The phases before power transmission include Selection phase, Ping phase, Identification and Configuration phase, Negotiation phase, and Calibration phase. Hereinafter, the Identification and Configuration phase is referred to as "I&C phase".

In the Selection phase, the power transmitting apparatus 102 intermittently transmits Analog Ping to detect the presence of an object within the power transmittable range (for example, an event indicating that the power receiving apparatus 101, a conductor piece, or the like is placed on the charging stand 103).

In the Ping phase, the power transmitting apparatus 102 sends a Digital Ping, which has more power than the Analog Ping. The magnitude of power of the Digital Ping is sufficient to activate the control unit 200 of the power receiving apparatus 101 placed on top of the power transmitting apparatus 102. The power receiving apparatus 101 notifies the power transmitting apparatus 102 of the magnitude of the received power voltage by a Signal Strength Packet. Thus, the power transmitting apparatus 102 recognizes that the object detected in the Selection phase is the power receiving apparatus 101 by receiving a response from the power receiving apparatus 101 that has received the Digital Ping.

Upon receiving the notification about the received power voltage, the power transmitting apparatus 102 transitions to the I&C phase. Before transmitting the Digital Ping, the power transmitting apparatus 102 measures the Q-Factor of the power transmitting antenna (power transmitting coil). The result of the measurement is used to perform the foreign object detection process using the Q-value before transmitting the Digital Ping.

In the I&C phase, the power transmitting apparatus 102 identifies the power receiving apparatus 101 and acquires the device configuration information (capability information) from the power receiving apparatus 101. For this purpose, the power receiving apparatus 101 sends an ID Packet and a Configuration Packet. The ID Packet contains the information regarding an identifier serving as the identification information of the power receiving apparatus 101, and the Configuration Packet contains device configuration information (capability information) of the power receiving apparatus 101. Upon receiving the ID Packet and Configuration Packet, the power transmitting apparatus 102 responds with an acknowledgement (ACK, positive acknowledgement). Then, the I&C phase ends, and phase transition to the next Negotiation phase occurs.

In the Negotiation phase, a GP value is determined on the basis of a GP value required by the power receiving apparatus 101 and the transfer capability of the power transmitting apparatus 102. The foreign object detection processing unit 403 of the power transmitting apparatus 102 performs the foreign object detection process using the Q-value in accordance with the request from the power receiving apparatus 101. The WPC standard also specifies a method by which the same processing as in the Negotiation phase is performed again at the request of the power receiving apparatus 101 after the phase once transitions to the Power Transfer phase (described below). Hereinafter, the phase in which these processes are performed after the phase transition from the Power Transfer phase is referred to as "Renegotiation phase".

In the Calibration phase, the power receiving apparatus 101 notifies the power transmitting apparatus 102 of a predetermined received power value (the received power value in the light load condition/the received power value in the maximum load condition) on the basis of the WPC standard, and the power transmitting apparatus 102 makes adjustments to transmit power efficiently. The received power value notified to the power transmitting apparatus 102 is used for the foreign object detection process using the power loss technique.

In the Power Transfer phase, control is performed for continuation of power transmission and power transmission outage due to an error, a full charge, or the like. The power transmitting apparatus 102 and the power receiving apparatus 101 perform communication for the power transmission and reception control through In-band communication based on the WPC standard, in which signals are superimposed using the same antenna (coil) as for wireless power transmission.

The range in which In-band communication based on the WPC standard is available between the power transmitting apparatus 102 and power receiving apparatus 101 is substantially the same as the power transmittable range.

That is, in Fig. 1, the range 104 represents the range where wireless power transmission and In-band communication can be performed by the power transmitting and receiving coils of the power transmitting apparatus 102 and the power receiving apparatus 101.

(Foreign Object Detection Method)

The foreign object detection method according to the present embodiment is described in detail below. In addition to foreign object detection methods (1) and (2) described below, the foreign object detection process using the Q-value defined in the WPC standard is performed in the Ping phase and the Negotiation phase.

(1) Foreign Object Detection Method Based on Power Loss Technique

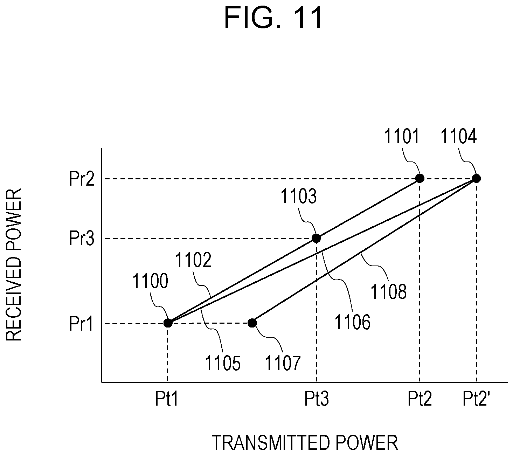

The foreign object detection method based on a power loss technique defined in the WPC standard is described below with reference to Fig. 11. The abscissa in Fig. 11 represents the transmitted power of the power transmitting apparatus 102, and the ordinate represents the received power of the power receiving apparatus 101. The power transmitting apparatus 102 transmits a Digital Ping to the power receiving apparatus 101 first. Then, the power transmitting apparatus 102 receives, from the power receiving apparatus 101, a received power value Pr1 received by the power receiving apparatus 101 in a light load condition as a Received Power Packet (mode 1) (hereinafter referred to as an "RP packet (mode 1)") . At this time, the power receiving apparatus 101 does not supply the received power to the load (for example, the charging circuit and battery). The power transmitting apparatus 102 then memorizes the received power value Pr1 at a point 1100 and the transmitted power value Pt1 of the time illustrated in Fig. 11. Then, the power transmitting apparatus 102 recognizes that the power loss between the power transmitting apparatus 102 and the power receiving apparatus 101 is Pt1 - Pr1 ($P_{loss1}$) when a power of the transmitted power value Pt1 is transmitted.

Subsequently, the power transmitting apparatus 102 receives, from the power receiving apparatus 101, the received power value Pr2 received by the power receiving apparatus 101 in the maximum load condition as a Received Power Packet (mode 2) (hereinafter referred to as an "RP packet (mode 2)"). At this time, the power receiving apparatus 101 supplies the received power to the load.

The power transmitting apparatus 102 then memorizes the received power value Pr2 at a point 1101 and the transmitted power value Pt2 of the time in Fig. 11. Then, the power transmitting apparatus 102 recognizes that the power loss between the power transmitting apparatus 102 and the power receiving apparatus 101 is Pt2 - Pr2 ($P_{loss2}$) when a power of the transmitted power value Pt2 is transmitted.

Then, through the calibration process, the power transmitting apparatus 102 interpolates a straight line between the points 1100 and 1101 to create a straight line 1102. The straight line 1102 represents the relationship between the transmitted power and the received power when no foreign object is present around the power transmitting apparatus 102 and the power receiving apparatus 101. Thus, the power transmitting apparatus 102 can estimate the received power in a condition where it is highly likely that no foreign object is present, on the basis of the transmitted power value and the straight line 1102. For example, if the transmitted power value is Pt3, the power transmitting apparatus 102 can estimate that the received power value is Pr3 from a point 1103 on the straight line 1102 indicating that the transmitted power value is Pt3. The process of creating the straight line is performed in the Calibration phase.

Suppose that when the power transmitting apparatus 102 transmits power of a transmitted power value Pt3 to the power receiving apparatus 101, the power transmitting apparatus 102 receives a received power value Pr3' from the power receiving apparatus 101. Then, the power transmitting apparatus 102 calculates the value Pr3 - Pr3' (= $P_{loss}$_FO) by subtracting the received power value Pr3' actually received from the power receiving apparatus 101 from the received power value Pr3 in the condition where no foreign object is present.

The power value $P_{loss}$_FO can be considered as the power loss consumed by a foreign object when a foreign object is present between the power transmitting apparatus 102 and power receiving apparatus 101. Therefore, if the power value $P_{loss}$_FO, which is estimated to be consumed by the foreign object, exceeds a predetermined threshold, the power transmitting apparatus 102 determines that a foreign object is present.

Alternatively, the power transmitting apparatus 102 calculates in advance the power loss Pt3 - Pr3 ($P_{loss3}$) between the power transmitting apparatus 102 and the power receiving apparatus 101 from the received power value Pr3 in the condition where no foreign object is present. Then, the power transmitting apparatus 102 calculates the power loss Pt3 - Pr3' ($P_{loss3}$') between the power transmitting apparatus 102 and the power receiving apparatus 101 in the condition where a foreign object is present from the received power value Pr3' received from the power receiving apparatus in the condition where a foreign object is present. Then, the power transmitting apparatus 102 may calculate the power value $P_{loss}$_FO that is estimated to be consumed by a foreign object by using $P_{loss3}$'- $P_{loss3}$ (= $P_{loss}$_FO). As described above, the power value $P_{loss}$_FO that is estimated to be consumed by a foreign object may be obtained as Pr3 - Pr3' (= $P_{loss}$_FO) or

$P_{loss3}$' - $P_{loss3}$ (= $P_{loss_}$FO).

After obtaining the straight line 1102 representing the reference value through the calibration process, the power transmitting apparatus 102 periodically receives the current received power value (Pr3') from the power receiving apparatus 101 in the Power Transfer phase. The current received power value periodically transmitted by the power receiving apparatus 101 is sent to the power transmitting apparatus 102 as a Received Power Packet (mode 0) (hereinafter referred to as an "RP packet (mode 0)"). The power transmitting apparatus 102 performs foreign object detection on the basis of the received power value stored in the RP packet (mode0) and the straight line 1102. According to the present embodiment, the points 1100 and 1101 used to obtain the straight line 1102, which represents the relationship between the transmitted power and the received power when no foreign object is present around the power transmitting apparatus 102 and the power receiving apparatus 101, are referred to as "calibration data points". In addition, the line segment (the straight line 1102) obtained by interpolating at least two calibration data points is referred to as a "Calibration curve".

If a foreign object is present when the Calibration curve is derived, a straight line 1106 connecting the point 1100 to a point 1104 may be derived as a Calibration curve 1105, for example. The same applies to a straight line 1108 connecting a point 1107 and the point 1104.

For this reason, according to the present embodiment, foreign object detection based on the Q-value measurement method in the time domain (described below) is employed to detect the absence of a foreign object and derive a correct Calibration curve.

(2) Foreign Object Detection Method Based on Q-Value

Measurement Method in Time Domain

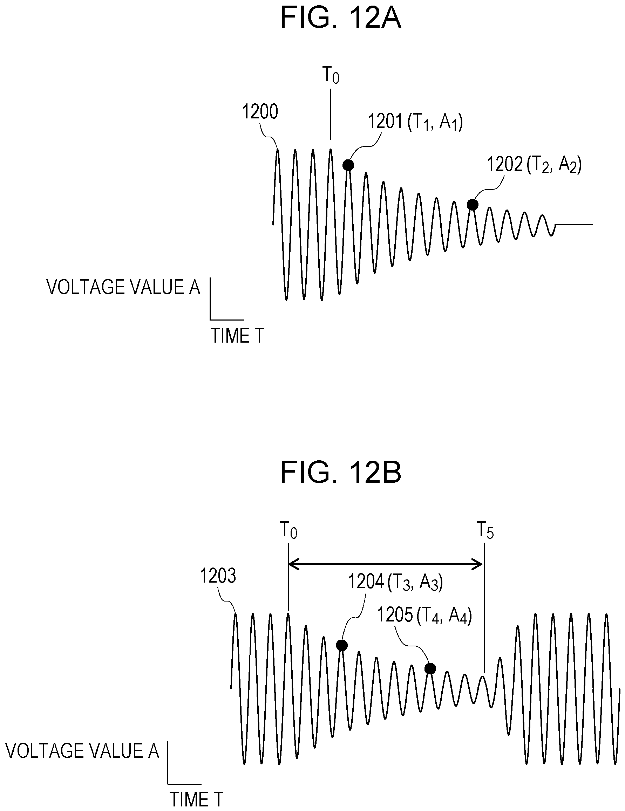

The foreign object detection method based on the Q-value measurement method in the time domain is described below with reference to Figs. 12A and 12B. A waveform 1200 in Fig. 12A represents a temporal change in the value of a high-frequency voltage applied to an end portion of the power transmitting coil 303 or the resonant capacitor 305 of the power transmitting apparatus 102 (hereinafter simply referred to as the voltage value of a power transmitting coil), where the abscissa represents the time, and the ordinate represents the voltage value. The example illustrated in Fig. 12A describes that application of a high-frequency voltage (power transmission) is stopped at time $T_0$. A point 1201 is a point on the envelope curve of the high-frequency voltage, and ($T_1$, $A_1$) at the point 1201 that represents the high-frequency voltage at time $T_1$ indicates that the voltage value at time $T_1$ is $A_1$. Similarly, a point 1202 is a point on the envelope curve of the high-frequency voltage and represents the high-frequency voltage at time $T_2$. ($T_2$, $A_2$) at the point 1202 indicates that the voltage value at time $T_2$ is $A_2$. The quality factor (Q-value) of the power transmitting coil 303 is measured on the basis of the temporal change in the voltage value after time $T_0$. More specifically, the Q-value is calculated on the basis of the time, voltage value, and frequency f of the high-frequency voltage (hereinafter referred to as an "operating frequency") at each of the points 1201 and 1202, which are the envelope curve of the voltage value, as follows:

$$Q = \pi f(T_2 - T_1)/\ln(A_1/A_2) \quad \ldots \text{ (Equation 1).}$$

The processing performed by the power transmitting apparatus 102 according to the present embodiment to measure the Q-value in the time domain is described below with reference to Fig. 12B. A waveform 1203 represents the value of the high-frequency voltage applied to the power transmitting coil 303, and the frequency is between 120 kHz and 148.5 kHz used in the Qi standard. Points 1204 and 1205 are part of the envelope curve of the voltage value.

For example, the power transmission processing unit 402 of the power transmitting apparatus 102 stops power transmission for the interval from time $T_0$ to $T_5$. The foreign object detection processing unit 403 of the power transmitting apparatus 102 measures the Q-value using the above-described Equation (1) and a voltage value $A_3$ at time $T_3$ (the point 1204), a voltage value $A_4$ at time $T_4$ (the point 1205), and the operating frequency of the high-frequency voltage. The power transmission processing unit 402 of the power transmitting apparatus 102 resumes power transmission at time $T_5$. Thus, the Q-value (Q-factor) is measured on the basis of a lapse of time, and the voltage value, and the operating frequency after the power transmitting apparatus 102 momentarily stops transmitting power. Hereinafter, the interval from time $T_0$ to $T_5$ during which power transmission is stopped is referred to as "outage time".

The Q-value decreases when a foreign object is present in the vicinity of the power transmitting apparatus 102 and the power receiving apparatus 101. This is because energy loss occurs due to the presence of a foreign object. Therefore, focusing on the slope of the voltage value attenuation, the slope of the straight line connecting the points 1204 and 1205 is steeper when a foreign object is present than when no foreign object is present, because of the occurrence of energy loss caused by the foreign object, and the attenuation rate of the amplitude of the waveform increases. That is, the foreign object detection method based on the Q-value measurement method in the time domain determines the presence or absence of a foreign object on the basis of the attenuation condition for the voltage value between the points 1204 and 1205. In addition, in actual determination of the presence or absence of a foreign object, the determination can be made by comparing some numerical values that represent the attenuation condition. For example, the above-described Q-value can be used for the determination. Instead of the voltage value, waveform attenuation of the current value may be used.

The outage time needs to be predetermined on the basis of the characteristics of the power transmitting apparatus 102 and the power receiving apparatus 101 before measuring the Q-value. For example, the available minimum outage time depends on the capabilities of the switch 306 and the control unit 300 of the power transmitting apparatus 102, so that the outage time needs to be longer than the available minimum outage time. In addition, since the accuracy of foreign object detection varies in accordance with the operating frequency and a decrease in voltage value even when the outage time is the same, it is necessary to select an outage time that can maintain a predetermined system. Furthermore, depending on the type of power receiving apparatus 101, the power receiving apparatus 101 may not function properly if the received power decreases for a certain time period or more. Therefore, the outage time need be longer than the longest outage time that the power receiving apparatus 101 can tolerate.

(Flow of Basic Processing Performed by Power transmitting apparatus 102)

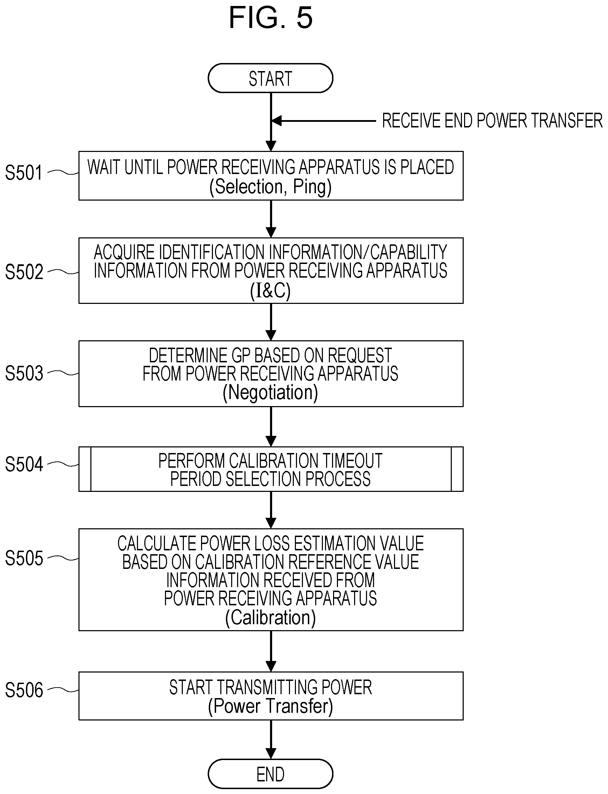

An example of the flow of basic processing performed by the power transmitting apparatus 102 is described below. Fig. 5 is a flowchart of an example of the basic processing procedure performed by the power transmitting apparatus 102 according to the present embodiment. The processing is realized, for example, by the control unit 300 of the power transmitting apparatus 102 executing a program read from the memory 307. The processing is performed in response to the power-on of the power transmitting apparatus 102, input of an instruction to start a contactless charging application from a user of the power transmitting apparatus 102, or connection of the power transmitting apparatus 102 to a commercial power source that supplies power to the power transmitting apparatus 102. Alternatively, the processing may be initiated by another trigger.

In S501, the control unit 300 of the power transmitting apparatus 102 first performs the processing specified as the Selection phase and the Ping phase defined by the WPC standard and waits for an object to be placed on the power transmitting apparatus 102.

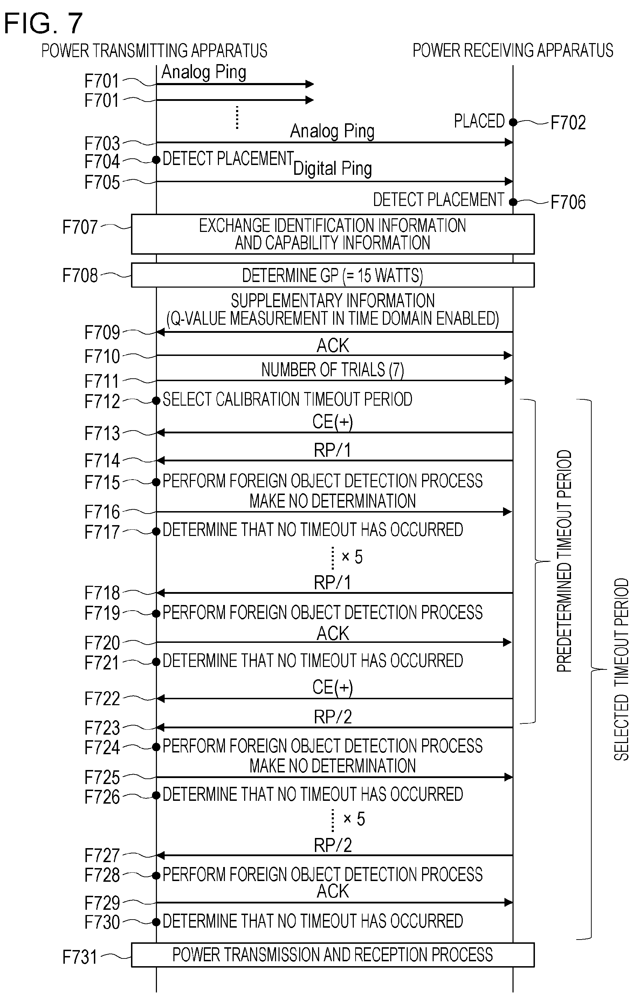

The processing specified as the Selection phase and Ping phase and performed in S501 is described below with reference to Fig. 7. In the Selection phase, the communication processing unit 401 of the power transmitting apparatus 102 repeatedly and intermittently transmits an Analog Ping defined by the WPC standard (F701). When the power receiving apparatus 101 is placed (F702), a change in the Analog Ping occurs (F703) and, thus, the control unit 300 of the power transmitting apparatus 102 detects that an object is placed (F704). Upon detecting the presence of an object in the power transmittable range, the processing transitions to the Ping phase, and the communication processing unit 401 of the power transmitting apparatus 102 transmits a Digital Ping defined in the WPC standard (F705). Upon receiving the Digital Ping, the power receiving apparatus 101 detects that the power receiving apparatus 101 is placed on the power transmitting apparatus 102 (F706). Upon receiving a predetermined response to the Digital Ping, the control unit 300 of the power transmitting apparatus 102 determines that the detected object is the power receiving apparatus 101 and, thus, the power receiving apparatus 101 is placed on the charging stand 103.

When the control unit 300 detects that the power receiving apparatus 101 is placed in S501, the communication processing unit 401 of the power transmitting apparatus 102 acquires the identification information and the capability information from the power receiving apparatus 101 through communication in the I&C phase defined in the WPC standard in S502. The identification information received from the power receiving apparatus 101 using the ID Packet includes Manufacturer Code and a Basic Device ID as the identifier information. The capability information received from the power receiving apparatus 101 using the Configuration Packet includes an information element that determines the supported version of the WPC standard. The capability information includes the Maximum Power Value, which is a value that determines the maximum power that the power receiving apparatus 101 can supply to the load, and information as to whether the power receiving apparatus 101 has the Negotiation function defined by the WPC standard.

The above-described information acquired in S502 is only an example, and the identification information and capability information regarding the power receiving apparatus 101 may be replaced with other information or may include other information in addition to the above-described information. For example, the identification information may be any other identification information that can identify an individual power receiving apparatus 101, such as a Wireless Power ID. Alternatively, the power transmitting apparatus 102 may acquire the identification information and the capability information regarding the power receiving apparatus 101 by a method other than the communication in the I&C phase defined by the WPC standard.

Thereafter, in S503, the control unit 300 of the power transmitting apparatus 102 performs the Negotiation process with the power receiving apparatus 101 by communication in the Negotiation phase defined by the WPC standard to determine the GP value. In S503, instead of the communication in the Negotiation phase defined by the WPC standard, another procedure may be performed to determine the GP. In some cases, the power transmitting apparatus 102 may acquire information indicating that the power receiving apparatus 101 does not support the Negotiation phase in S502, for example. In such a case, the power transmitting apparatus 102 may set the GP value to a small value without performing the communication in the Negotiation phase (for example, a small value predefined in the WPC standard). Furthermore, in the Negotiation phase, in addition to performing the procedure for determining the GP, the power transmitting apparatus 102 exchanges information regarding foreign object detection based on the Q-value measurement method in the time domain with the power receiving apparatus 101. For example, the power receiving apparatus 101 notifies the power transmitting apparatus 101 of supplementary information as to whether the power receiving apparatus 101 is capable of performing foreign object detection based on the Q-value measurement method in the time domain. Alternatively, the power transmitting apparatus 102 notifies the power receiving apparatus 101 of the number of trials of foreign object detection based on the Q-value measurement method in the time domain.

Subsequently, in S504, the power transmitting apparatus 102 performs the process of selecting the Calibration timeout period. The processing procedure for selecting the Calibration timeout period is described in detail below.

Subsequently, in S505, the foreign object detection processing unit 403 of the power transmitting apparatus 102 performs the Calibration phase on the basis of the selected timeout period. As described above, in the Calibration phase, the foreign object detection processing unit 403 of the power transmitting apparatus 102 derives the relationship between the transmitted power and the received power in the absence of a foreign object. More specifically, the foreign object detection processing unit 403 of the power transmitting apparatus 102 derives a Calibration curve using the predetermined received power values (including the received power value in the light load condition and the received power value in the maximum load condition) acquired from the power receiving apparatus 101. When deriving the Calibration curve, the foreign object detection processing unit 403 of the power transmitting apparatus 102 performs foreign object detection based on the Q-value measurement method in the time domain each time the foreign object detection processing unit 403 acquires a predetermined received power value.

If it is determined in the Negotiation phase to perform multiple trials of foreign object detection based on the Q-value measurement method in the time domain, the foreign object detection processing unit 403 acquires the received power value and performs foreign object detection as many times as the number of trials for each of the predetermined received power values. This avoids the derivation of the Calibration curve in the presence of a foreign object and, thus, avoids nondetection or false detection of a foreign object.

Subsequently, in S506, the power transmission processing unit 402 of the power transmitting apparatus 102 starts power transmission to the power receiving apparatus 101 by the Power Transfer phase. Although power transmission is performed by the processing in the Power Transfer phase, the processing is not limited thereto. Power transmission may be performed by a method other than defined in the WPC standard.

If the control unit 300 of the power transmitting apparatus 102 determines that the power receiving apparatus 101 is not placed on the power transmitting apparatus 102, the processing returns to the Selection phase in S501. If the power transmitting apparatus 102 receives the End Power Transfer defined by the WPC standard from the power receiving apparatus 101, the power transmitting apparatus 102 forcibly terminates a process in any processing phase in accordance with the WPC standard, stops power transmission, and returns to the Selection phase in S501. When the battery is fully charged, the End Power Transfer is also sent from the power receiving apparatus 101 and, thus, the power transmitting apparatus 102 returns to the Selection phase in S501.

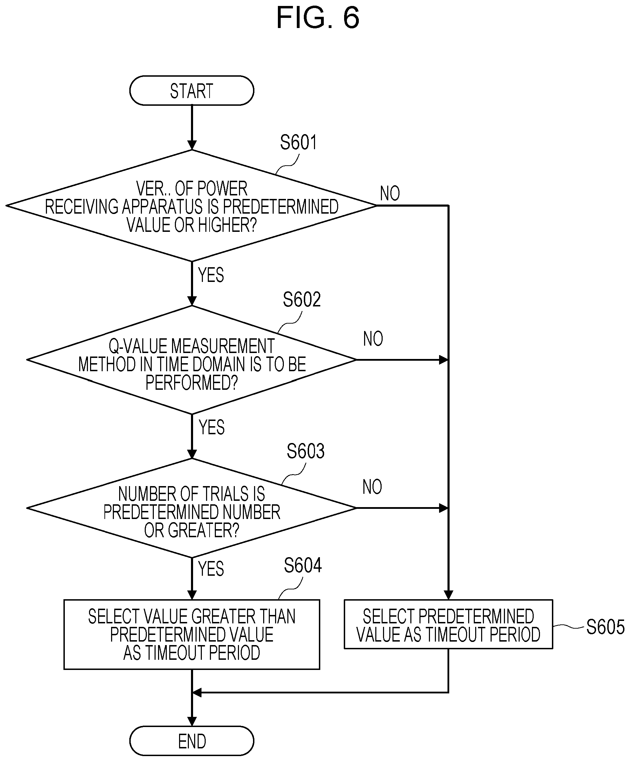

An example of the flow of the Calibration timeout period selection processing performed by the power transmitting apparatus 102 in S504 is described below with reference to Fig. 6. Hereinafter, the case where selection is made is described as an example. However, the timeout period may be selected from a predefined list of candidates or may be determined by calculation according to a specific rule.

In S601, the time selection processing unit 404 first determines whether the Qi standard version of the power receiving apparatus 101 is a predetermined version or higher. The time selection processing unit 404 can determine whether the version is the predetermined version or higher on the basis of the version information in the capability information contained in the Configuration Packet received from the power receiving apparatus 101 in the I&C phase. Alternatively, the time selection processing unit 404 can make the determination on the basis of, for example, information contained in another packet or information acquired through using out-band communication, such as Bluetooth (registered trademark) or NFC.

If the result of the determination in S601 indicates that the version of the power receiving apparatus 101 is the predetermined version or higher, the processing proceeds to S602. However, if it is determined that the version of the power receiving apparatus 101 is not the predetermined version or higher, the processing proceeds to S605. In S605, the time selection processing unit 404 of the power transmitting apparatus 102 selects a predetermined value as the timeout period related to the processing in the Calibration phase, and the processing ends. The predetermined value is a reference value set by default.

In addition, in S602, the control unit 300 of the power transmitting apparatus 102 determines whether the foreign object detection based on the Q-value measurement method in the time domain is to be performed. In the Negotiation phase in S503, as illustrated in Fig. 7, the power receiving apparatus 101 notifies supplementary information as to whether foreign object detection based on the Q-value measurement method in the time domain can be performed (F709).

Therefore, the control unit 300 then determines whether foreign object detection based on the Q-value measurement method in the time domain is performed on the basis of the supplementary information. Alternatively, for example, the determination may be made on the basis of whether the supplementary information that indicates whether the power receiving apparatus 101 can support the foreign object detection method based on the Q-value measurement method in the time domain has been received from the power receiving apparatus 101. In this case, if the control unit 300 has not received the supplementary information, it may be determined that the foreign object detection based on the Q-value measurement method in the time domain can be performed by default, or it may be determined that the power receiving apparatus 101 does not support the foreign object detection method based on the Q-value measurement method in the time domain and, thus, the foreign object detection based on the Q-value measurement method in the time domain is not performed.

If a result of the determination in S602 indicates that foreign object detection based on the Q-value measurement method in the time domain can be performed, the processing proceeds to S603. However, if foreign object detection based on the Q-value measurement method in the time domain cannot be performed, the processing proceeds to S605.

In S603, the control unit 300 of the power transmitting apparatus 102 determines whether the foreign object detection based on the Q-value measurement method in the time domain is to be performed a predetermined number of times or more. In this process, it is determined whether the number of trials determined in the exchange of information with the power receiving apparatus 101 in the Negotiation phase in S503 is a predetermined number or greater. Alternatively, for example, it may be determined whether the number of trials is the predetermined number or greater on the basis of the default number of trials defined in the power transmitting apparatus 102. As a result of the determination in S603, if the number of trials to be conducted is the predetermined number or greater, the processing proceeds to S604. However, if the number of trials to be conducted is not the predetermined number or greater, the processing proceeds to S605.

In S604, the time selection processing unit 404 of the power transmitting apparatus 102 selects a value greater than the predetermined value determined in S605 as the timeout period related to the processing in the Calibration phase and ends the processing. The value greater than the predetermined value is a fixed value predetermined by the Qi standard. However, the value may be a variable value that increases in proportion to the number of trials, for example.

In addition, the timeout period is determined in accordance with the processing time required to perform the foreign object detection based on the Q-value measurement method in the time domain and the processing time required for the power receiving apparatus 101 to send the predetermined received power value using the RP packet.

(Flow of Processing Performed by System)

The sequence of operations when the power transmitting apparatus 102 performs the above-described processing is described below with reference to Fig. 7. As an initial state, it is assumed that the power receiving apparatus 101 is not placed on the power transmitting apparatus 102 and that the power transmitting apparatus 102 has sufficient transfer capability to be able to perform transmission of the GP required by the power receiving apparatus 101. In the example illustrated in Fig. 7, the predetermined number of times that is the criterion for determination in S603 is 5. However, the number is only an example and may be a different value. The procedure F701 to F706 is the procedure described in S501 above.

In the I&C phase, the identification information and the capability information are exchanged between the power transmitting apparatus 102 and the power receiving apparatus 101 (F707). The process performed by the power transmitting apparatus 102 in F707 is the process in S502 illustrated in Fig. 5. In the example illustrated in Fig. 7, the version of the power receiving apparatus 101 is the predetermined version or higher on the basis of the capability information contained in the Configuration Packet.

Subsequently, the power transmitting apparatus 102 and the power receiving apparatus 101 perform communication in the Negotiation phase (F708). In the present example, it is determined that GP = 15 watts in the Negotiation process. After the GP is determined, the power transmitting apparatus 102 receives, from the power receiving apparatus 101, supplementary information indicating that foreign object detection based on the Q-value measurement method in the time domain can be performed (F709) and responds with an ACK (F710).

Subsequently, the power transmitting apparatus 102 then notifies the power receiving apparatus 101 of "7 times" as information regarding the number of trials of foreign object detection based on the Q-value measurement method in the time domain (F711), starts the process illustrated in Fig. 6, and selects a timeout period (F712). According to the present embodiment, the information regarding the number of trials for foreign object detection based on the Q-value measurement method in the time domain is included in the response to a Generic Request packet sent from the power receiving apparatus 101 and is sent. However, the information may be sent at another timing or using another packet.

Subsequently, the processing transitions to the Calibration phase, and the power transmitting apparatus 102 receives a Control Error packet (CE packet) containing a positive Control Error Value from the power receiving apparatus 101 (F713). The power transmitting apparatus 102 then changes the transmitted power output on the basis of the Control Error Value. Subsequently, when the power transmitting apparatus 102 receives, from the power receiving apparatus 101, an RP packet (mode 1) indicating the received power value in the light load condition (F714), the power transmitting apparatus 102 performs the foreign object detection process based on the Q-value measurement method in the time domain (F715). Since this is the first of seven trials, the power transmitting apparatus 102 responds that the power transmitting apparatus 102 does not make a determination (F716). After completion of the response, the power transmitting apparatus 102 determines whether a timeout related to the processing in the Calibration phase has not occurred. In the example illustrated in Fig. 7, the power transmitting apparatus 102 determines that the selected timeout period has not elapsed (no timeout has occurred) (F717). Thereafter, the processing from F714 to F717 is repeated five more times between the power transmitting apparatus 102 and the power receiving apparatus 101.

Subsequently, when the power transmitting apparatus 102 receives an RP packet (mode 1) from the power receiving apparatus 101 (F718), the power transmitting apparatus 102 performs the foreign object detection process based on the Q-value measurement method in the time domain (F719). Because this is the seventh of seven trials, the power transmitting apparatus 102 determines that no foreign object is present on the basis of the results of the foreign object determination processes in the first to seventh trials. Then, the power transmitting apparatus 102 responds with an ACK to the effect that the power transmitting apparatus 102 accepts the received power value as the received power value Pr1 in the light load condition to be used to derive the Calibration curve (F720). If it is determined that a foreign object is present on the basis of the seven detection results of the foreign object detection process based on the Q-value measurement method in the time domain, the Calibration curve cannot be derived. Therefore, in such a case, the power transmitting apparatus 102 responds with a NAK (negative acknowledgment) to the effect that the power transmitting apparatus 102 cannot accept the received power value as the power value in the light load condition.

Upon completion of the response, the power transmitting apparatus 102 determines whether a timeout related to the process in the Calibration phase has not occurred. In the example illustrated in Fig. 7, it is assumed that the power transmitting apparatus 102 has determined that the selected timeout period has not elapsed (no timeout has occurred) (F721) .

Subsequently, between the power transmitting apparatus 102 and the power receiving apparatus 101, processing that is the same as the processing from F713 to F717 is performed for the RP packet (mode 2) which indicates the received power value in the maximum load condition (F722 to F726). Thereafter, upon receiving the RP packet (mode 2) from the power receiving apparatus 101 (F727), the power transmitting apparatus 102 performs the foreign object detection process based on the Q-value measurement method in the time domain (F728). Since this is the seventh of seven trials, the power transmitting apparatus 102 determines that no foreign object is present on the basis of the results of the foreign object detection processes in the first to seventh trials. The power transmitting apparatus 102 then responds with an ACK to the effect that the power transmitting apparatus 102 accepts the received power value as the received power value Pr2 in the maximum load condition to be used to derive the Calibration curve (F729). Upon completion of the response, the power transmitting apparatus 102 determines whether a timeout related to the processing in the Calibration phase has not occurred. In the example illustrated in Fig. 7, if a timeout period is selected in S605, it is assumed that the timeout period has already elapsed. In the example illustrated in Fig. 7, the power transmitting apparatus 102 determines that although the predetermined timeout period has elapsed, no timeout has occurred because the selected timeout period has not elapsed (F730). Thereafter, the Calibration phase ends, and the processing transitions to the Power Transfer phase in which processing is performed that is related to power transmission and reception between the power transmitting apparatus 102 and the power receiving apparatus 101 (F731).

As described above, according to the present embodiment, the power transmitting apparatus 102 can select a timeout period necessary and sufficient to perform the Calibration process in accordance with the details of the trial of the foreign object detection process. This makes it possible to derive the Calibration curve with high accuracy and achieve a safer and more efficient wireless power transmission system.

(Second Embodiment)

According to the first embodiment, the power transmitting apparatus that is responsible for deriving the Calibration curve changes the timeout period related to the processing in the Calibration phase to a greater value on the basis of the details of the trial of foreign object detection as necessary. However, if the timeout period is set to a value greater than a predetermined value, the time required before start of power transmission and reception increases. For this reason, if control is acceptable that enables the processing in the Calibration phase to be performed without changing the timeout period, such control is desirable. According to the present embodiment, an example of a control method is described in which a power receiving apparatus selects the maximum transmission time interval of RP packets in accordance with the details of the trial of foreign object detection process and performs control. Since the internal configurations of the power transmitting apparatus and a power receiving apparatus are the same as in the first embodiment, description of the power transmitting apparatus and the power receiving apparatus is omitted, and the differences from the first embodiment are described below. According to the present embodiment, the power transmitting apparatus 102 does not perform the timeout period selection processing, and the timeout period is fixed to the value set in S605.

(Flow of Processing Performed by Power receiving apparatus)

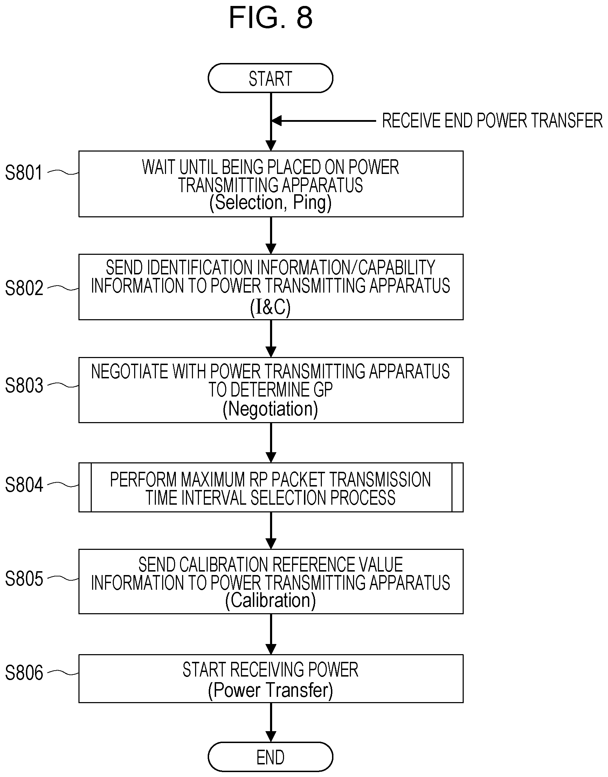

Fig. 8 is a flowchart of an example of the basic processing procedure performed by the power receiving apparatus 101 according to the present embodiment. The processing is realized, for example, by the control unit 200 of the power receiving apparatus 101 executing a program read from the memory 209. The processing may be performed in response to activation of the power receiving apparatus 101 that is activated by power transmission from the battery 206 or the power transmitting apparatus 102 due to the power-on of the power receiving apparatus 101. Alternatively, the processing may be performed in response to an input of an instruction to start a contactless charging application from a user of the power receiving apparatus 101. Still alternatively, the processing may be initiated by another trigger.

In S801, the control unit 200 of the power receiving apparatus 101 performs a process defined by the WPC standard as the Selection phase and the Ping phase and waits until the power receiving apparatus 101 is placed on the power transmitting apparatus 102 (S801). The control unit 200 of the power receiving apparatus 101 detects that the power receiving apparatus 101 is placed on the power transmitting apparatus 102 by detecting a Digital Ping from the power transmitting apparatus 102, for example.

Upon detecting that the power receiving apparatus 101 is placed on the power transmitting apparatus 102 in S501, the control unit 200 of the power receiving apparatus 101 sends the identification information and the capability information to the power transmitting apparatus 102 by communication in the I&C phase defined by the WPC standard in S802. At this time, the power receiving apparatus 101 stores the identification information in the ID Packet, sends the ID Packet, stores the capability information in the Configuration Packet, and sends the Configuration Packet.

Subsequently, in S803, the control unit 200 of the power receiving apparatus 101 exchanges information with the power transmitting apparatus 102 through communication in the Negotiation phase defined in the WPC standard and determines the GP. Furthermore, in S803, in addition to performing the procedure for determining the GP, the control unit 200 exchanges information regarding foreign object detection based on the Q-value measurement method in the time domain with the power transmitting apparatus 102. For example, the information includes the processing time required to perform the foreign object detection based on the Q-value measurement method in the time domain and the processing time required to cause the received power value to reach a predetermined received power value.

Thereafter, in S804, the control unit 200 of the power receiving apparatus 101 performs the selection process for selecting the maximum transmission time interval of RP packets. The selection process for selecting the maximum transmission time interval of RP packets is described in detail below.

Subsequently, in S805, the control unit 200 of the power receiving apparatus 101 performs communication in the Calibration phase defined by the WPC standard. In this process, as described above, information such as the predetermined received power values necessary to derive the Calibration curve is sent to the power transmitting apparatus 102. Then, in S806, the control unit 200 of the power receiving apparatus 101 starts receiving power through communication in the Power Transfer phase defined in the WPC standard. Thereafter, the power receiving apparatus 101 sends the End Power Transfer defined by the WPC standard to the power transmitting apparatus 102 when an error occurs or when a full charge is reached. This stops power transmission from the power transmitting apparatus 102, and the series of processes for contactless charging ends.

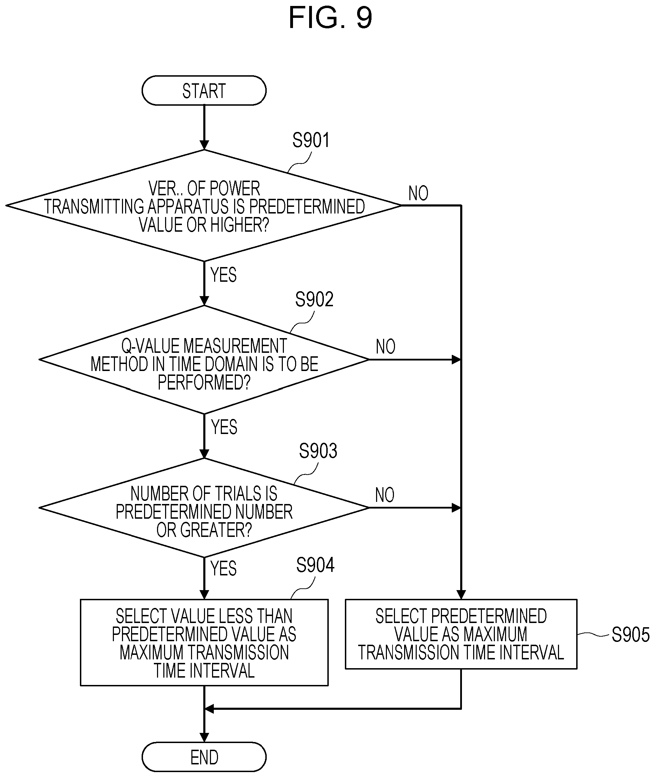

The flow of the selection process for selecting the maximum transmission time interval of RP packets, which is performed by the power receiving apparatus 101 in S804, is described in detail below with reference to Fig. 9.

First, in S901, the control unit 200 of the power receiving apparatus 101 determines whether the version of the power transmitting apparatus 102 is a predetermined version of the Qi standard or higher. In this processing, the control unit 200 first sends the Generic Request packet to the power transmitting apparatus 102 and determines whether the version is the predetermined version or higher on the basis of the version information contained in the response. However, for example, the determination may be made on the basis of the version information sent from the power transmitting apparatus 102 using another packet or information obtained using out-band communication, such as Bluetooth or NFC. Alternatively, the version information may be acquired as the capability information from the power transmitting apparatus 102 in the I&C phase, and the determination may be made on the basis of the acquired information.

If, as the result of the determination in S901, the version is the predetermined version or higher, the processing proceeds to S902. However, if the version is not the predetermined version or higher, the processing proceeds to S905. In S905, the control unit 200 of the power receiving apparatus 101 selects a predetermined value as the maximum transmission time interval of RP packets and ends the processing. The predetermined value is a reference value set by default.

In S902, the control unit 200 of the power receiving apparatus 101 determines whether foreign object detection based on the Q-value measurement method in the time domain is to be performed. At this time, the determination as to whether foreign object detection is to be performed is made on the basis of whether the control unit 200 itself supports foreign object detection based on the Q-value measurement method in the time domain. Alternatively, for example, the determination may be made on the basis of whether a notification regarding the number of trials of foreign object detection based on the Q-value measurement method in the time domain is received from the power transmitting apparatus 102. At this time, if the notification has not been received from the power transmitting apparatus 102, the control unit 200 may determine that foreign object detection based on the Q-value measurement method in the time domain can be performed. Alternatively, if the notification has not been received, the control unit 200 may determine that the foreign object detection method based on the Q-value measurement method in the time domain is not supported by the power transmitting apparatus 102 and, thus, cannot be performed. If, as a result of the determination in S902, foreign object detection based on the Q-value measurement method in the time domain can be performed, the processing proceeds to S903. However, if foreign object detection based on the Q-value measurement method in the time domain cannot be performed, the processing proceeds to S905.

In S903, the control unit 200 of the power receiving apparatus 101 determines whether the foreign object detection based on the Q-value measurement method in the time domain is attempted at least a predetermined number of times. In the process, it is determined whether the number of trials notified by the power transmitting apparatus 102 in the Negotiation phase is greater than or equal to the predetermined number.

Alternatively, for example, the determination may be made on the basis of whether a notification regarding the number of trials to detect a foreign object on the basis of the Q-value measurement method in the time domain is received from the power transmitting apparatus 102. At this time, if the notification is not received from the power transmitting apparatus 102, it may be determined that the predetermined number or more of trials are to be conducted or that less than the predetermined number of trials are to be conducted. If, as a result of the determination in S903, the predetermined number or more of trials are to be conducted, the processing proceeds to S904. If the predetermined number or more of trials are not to be conducted, the processing proceeds to S905.

In S904, the control unit 200 of the power receiving apparatus selects a value less than the predetermined value determined in S905 as the maximum transmission time interval of RP packets and ends the process. The value less than the predetermined value may be, for example, a variable value that decreases in proportion to the number of trials. The maximum transmission time interval is determined in accordance with the processing time required to perform foreign object detection based on the Q-value measurement method in the time domain and the processing time required until a predetermined received power value is reached.

(Flow of Processing Performed by System)

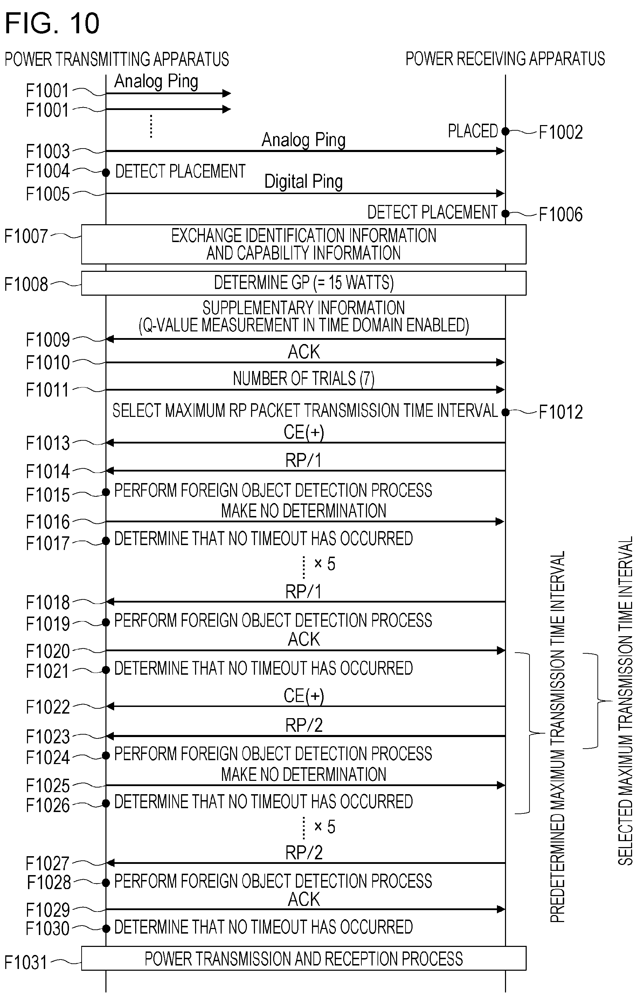

The sequence of operations when the power receiving apparatus 101 performs the above-described process is described below with reference to Fig. 10. F1001 to F1006 are the same as F701 to F706 in Fig. 7, respectively. According to the present embodiment, for example, in the I&C phase (F1007), in addition to the process in F707, the version information including a value that is the predetermined version or higher is received from the power transmitting apparatus 102. Thereafter, processes in F1008 to F1010 are performed, and a notification of the number of trials of foreign object detection based on the Q-value measurement method in the time domain is received from the power transmitting apparatus 102 (F1011). The processes in F1008 to F1010 are similar to the processes in F708 to F710 process in Fig. 7, respectively.

Upon receiving the notification of the number of trials from the power transmitting apparatus 102, the power receiving apparatus 101 starts a selection process for selecting the maximum transmission time interval for RP packets (F1012). The power receiving apparatus 101 selects a value less than the predetermined value as the maximum transmission time interval for RP packets because the version of the power transmitting apparatus 102 is the predetermined value or higher, foreign object detection based on the Q-value measurement method in the time domain can be performed, and the number of trials is the predetermined number (= 5 times) or greater. Thereafter, the processing in the Calibration phase is started between the power transmitting apparatus 102 and power receiving apparatus 101, and the power receiving apparatus 101 sends a CE packet including a positive Control Error Value to the power transmitting apparatus 102 (F1013).

Subsequently, the power receiving apparatus 101 sends an RP packet (mode 1) indicating the received power value in the light load condition to the power transmitting apparatus 102 (F1014), and the power transmitting apparatus 102 performs the foreign object detection process based on the Q-value measurement method in the time domain (F1015). Since this is the first of 7 trials, the power receiving apparatus 101 receives, from the power transmitting apparatus 102, a response to the effect that no determination is made (F1016). In the example illustrated in Fig. 10, it is assumed that upon completion of the response, the power transmitting apparatus 102 determines that no timeout related to the processing in the Calibration phase has not occurred (F1017). Thereafter, the power transmitting apparatus 102 and the power receiving apparatus 101 repeat the processing from F1014 to F1017 five more times. At this time, the power receiving apparatus 101 sends the next RP packet so as not to exceed the maximum transmission time interval selected in F1012 after receiving the response in the effect to no determination is made for the transmission of the previous RP packet.

Subsequently, the power receiving apparatus 101 sends an RP packet (mode 1) to the power transmitting apparatus 102 (F1018), and the power transmitting apparatus 102 performs the foreign object detection process based on the Q-value measurement method in the time domain (F1019). Since this is the seventh of seven trials, the power transmitting apparatus 102 determines that no foreign object is present on the basis of the results of the foreign object determination processes in the first to seventh trials. The power transmitting apparatus 102 then responds with an ACK to the effect that the power transmitting apparatus 102 accepts the received power value as the received power value Pr1 in the light load condition used to derive the Calibration curve (F1020). After completion of the response, the power transmitting apparatus 102 determines whether a timeout related to the processing in the Calibration phase has not occurred. In the example illustrated in Fig. 10, it is assumed that the power transmitting apparatus 102 determines that the predetermined timeout period has not elapsed (F1021).

Subsequently, the power receiving apparatus 101 sends a CE packet containing a positive Control Error Value to the power transmitting apparatus 102 to set the received power value in the maximum load condition (F1022). At this time, the power receiving apparatus 101 specifies a greater value as the positive Control Error Value than in the case where multiple trials of foreign object detection based on the Q-value measurement method in the time domain are not conducted. In addition, the power receiving apparatus 101 increases the number of CE packet transmissions as compared with the case where multiple trials of foreign object detection based on the Q-value measurement method in the time domain are not conducted. Thus, a desired received power value is reached in a shorter time than in the case where multiple trials of foreign object detection based on the Q-value measurement method in the time domain are not conducted.

That is, an RP packet (mode 2) indicating the received power value in the maximum load condition can be transmitted at shorter time intervals. Therefore, the Calibration process can be continued while maintaining the intervals even when a value less than the predetermined value is selected as the maximum transmission time interval for RP packets. Hereinafter, because the processes in F1023 to F1031 are similar to those in F723 to F731 in Fig. 7, respectively, descriptions of the processes are omitted.

As described above, according to the present embodiment, the power receiving apparatus 101 selects the maximum transmission time interval of RP packets in accordance with the details of trial of the foreign object detection process. This makes it possible to derive the Calibration curve within the predetermined timeout period related to the Calibration process while improving the accuracy of foreign object detection, which achieves a safer and more efficient wireless power transmission system.

(Other Embodiments)

According to the first embodiment, the power transmitting apparatus 102 starts the Calibration process immediately after selecting the timeout period through the timeout period selection processing. However, the power transmitting apparatus 102 may notify the power receiving apparatus 101 of the selected timeout period. For example, after the power transmitting apparatus 102 notifies the power receiving apparatus 101 of the number of trials of foreign object detection based on the Q-value measurement method in the time domain, the timeout period may be included in the response to the Generic Request packet sent from the power receiving apparatus 101 and may be sent. Alternatively, the notification may be provided at another timing or using another packet. This allows the power receiving apparatus 101 to efficiently control the value of Control Error Value to be included in a CE packet and the number of transmissions and the transmission time interval of RP packets in accordance with the timeout period notified by the power transmitting equipment 102, while reducing the processing load. Thus, a safer and more efficient wireless power transmission system can be achieved.

According to the second embodiment, the power receiving apparatus 101 starts the Calibration process immediately after selecting the maximum transmission time interval through the selection process for selecting the maximum transmission time interval for RP packets. However, the selected maximum transmission time interval may be notified to the power transmitting apparatus 102. For example, the maximum transmission time interval information can be included in a Specific Request packet and be sent before the RP packet is sent. However, the notification may be provided at another timing or using another packet. This allows the power transmitting apparatus 102 to use the notified maximum transmission time interval as a timeout period until receipt of the RP packet. Therefore, it is possible to determine whether a timeout related to the processing in the Calibration phase occurs at an earlier timing than using the timeout period until receipt of the predetermined RP packet.

According to the first and second embodiments, the number of trials of foreign object detection based on the Q-value measurement method in the time domain is notified by the power transmitting apparatus 102, and the power receiving apparatus 101 unconditionally accepts the number of trials. However, the power receiving apparatus 101 may refuse to accept the notified number of trials. For example, in some cases, when trial is conducted a number of times notified by the power transmitting apparatus 102, the processing in the Calibration phase is not completed within the timeout period. That is, in some cases, the transmission interval of RP packets cannot be reduced, for example. In this case, to redetermine the number of trials, the power receiving apparatus 101 may request the power transmitting apparatus 102 to notify the information regarding the number of trials again using, for example, the Generic Request packet. Alternatively, the power receiving apparatus 101 may send End Power Transfer to stop the processing and start the processing from the processing in the Selection phase again. Still alternatively, if it is certainly expected that the processing ends within the timeout period related to the processing in the Calibration phase, the number of trials may be redetermined so as to increase in order to improve the accuracy of foreign object detection.

According to the first and second embodiments, the case is described in which the processing in the Calibration phase ends within the timeout period related to the processing in the Calibration phase. If the timeout occurs, the power transmitting apparatus 102 stops transmitting power. However, the power transmission output may be reduced without stopping power transmission, or the processing in the Selection phase may be resumed after the power transmission outage. When the processing in the Selection phase is resumed, the timeout period is increased from the previously selected value, or the number of trials of foreign object detection based on the Q-value measurement method in the time domain is reduced and, thereafter, the processing in the Calibration phase is performed. This makes it possible to more reliably complete the processing in the Calibration phase within the timeout period, that is, to derive the Calibration curve. Thus, a safer and more efficient wireless power transmission system can be achieved. The processing performed by the power transmitting apparatus 102 according to the first embodiment may be combined with the processing performed by the power receiving apparatus 101 according to the second embodiment.

According to the first and second embodiments, the power transmitting apparatus 102 determines whether a timeout has occurred each time the power transmitting apparatus 102 receives an RP packet. However, the determination may be made at every multiple receipt of an RP packet or at predetermined time intervals. This can prevent unnecessary processing and achieve a highly efficient wireless power transmission system.

Each of the power receiving apparatus 101 and the power transmitting apparatus 102 can have a function to perform an application other than wireless charging. An example of the power receiving apparatus 101 is an information processing terminal, such as a smartphone, and an example of the power transmitting apparatus 102 is an accessory device for charging the information processing terminal. For example, the information terminal device includes a display unit (a display) that is supplied with the power received by the power receiving coil (antenna) to display information to the user. Alternatively, the power received by the power receiving coil is stored in a power storage unit (a battery), and the power is supplied to the display unit from the battery. In this case, the power receiving apparatus 101 may include a communication unit that communicates with another device different from the power transmitting apparatus 102. The communication unit may be compatible with communication standards such as NFC communication and the fifth generation mobile communication system (5G). In this case, the power may be supplied from the battery to the communication unit, and the communication unit may perform communication. The power receiving apparatus 101 may be a tablet terminal, a storage device, such as a hard disk drive or a memory device, or an information processing device, such as a personal computer (PC). Alternatively, the power receiving apparatus 101 may be an imaging device (such as a camera or a video camcorder), for example. The power receiving apparatus 101 may be an image input device, such as a scanner, or an image output device, such as a printer, a copying machine, or a projector. The power receiving apparatus 101 may also be a robot, a medical device, or the like. The power transmitting apparatus 102 can be a device for charging the devices described above.

The power transmitting apparatus 102 may be a smartphone. In this case, the power receiving apparatus 101 may be another smartphone or a wireless earphone.

The power receiving apparatus 101 according to the present embodiment may be a vehicle, such as an automobile. For example, an automobile that is the power receiving apparatus 101 may receive power from a charger (the power transmitting apparatus 102) via a power transmitting antenna installed in a parking lot. An automobile that is the power receiving apparatus 101 may receive power from a charger (the power transmitting apparatus 102) via a power transmitting coil (antenna) embedded in a road. In such a vehicle, the received power is supplied to a battery. The battery power may be supplied to a drive unit (a motor, an electric actuator) that drives the wheels or may be used to drive a sensor used to assist driving and a communication unit that communicates with an external device. That is, in this case, in addition to including the wheels, the power receiving apparatus 101 may include a battery and a motor and a sensor that are driven using the received power, and a communication unit that are also driven using the received power to communicate with a device other than the power transmitting apparatus 102. Furthermore, the power receiving apparatus 101 may include an accommodation unit that accommodates a person. An example of the sensor is a sensor used to measure the distance to a vehicle or another obstacle. The communication unit may be compatible with, for example, the Global Positioning System (Global Positioning Satellite, GPS). In addition, the communication unit may be compatible with a communication standard, such as the 5th generation mobile communication system (5G). The vehicle may be a bicycle or a motorcycle. The power receiving apparatus 101 is not limited to a vehicle, but may be a mobile object or a flying object including a drive unit that is driven using the power stored in a battery.

The power receiving apparatus 101 according to the present embodiment may also be an electric power tools, an electric home appliance, or the like. The equipment serving as the power receiving apparatus 101 may include a battery as well as a motor driven by the received power that has been stored in the battery. The equipment may further include notification means to notify a user of the battery level and other information. Furthermore, the equipment may include a communication unit that communicates with another device other than the power transmitting apparatus 102. The communication unit may be compatible with a communication standard, such as NFC or a fifth generation mobile communication system (5G).

The power transmitting apparatus 102 according to the present embodiment may be an in-vehicle charger that transmits power to a mobile information terminal, such as a smartphone or a tablet, which supports wireless power transmission in the compartment of an automobile. Such an in-vehicle charger may be provided at any location in a vehicle. For example, the in-vehicle charger may be installed in a console of the vehicle, in an instrument panel (dashboard), at a location between passenger seats, on the ceiling, or in a door. However, it is desirable that the in-vehicle charger not be installed at a location that interfere with driving. While description has been made with reference to an example in which the power transmitting apparatus 102 is an in-vehicle charger, the charger is not limited to a charger disposed in a vehicle, but may be installed in transportation equipment, such as a train, aircraft, ship, or the like. In this case, the charger may also be installed between passenger seats, on the ceiling, or in the door.

A vehicle, such as an automobile, equipped with an in-vehicle charger may be the power transmitting apparatus 102. In this case, the power transmitting apparatus 102 includes wheels and a battery and uses the power of the battery to supply the power to the power receiving apparatus 101 by using a power transmission circuit unit and a power transmitting coil (antenna).

The present disclosure can be realized by supplying a program that realizes one or more functions of the above-described embodiments to a system or apparatus via a network or a storage medium and causing one or more processors in a computer of the system or apparatus to read and execute the program. Alternatively, the present disclosure can be realized by a circuit (for example, ASIC) that realizes one or more functions.

The present invention is not limited to the above-described embodiments, and various changes and modifications can be made without departing from the spirit and scope of the invention. Accordingly, the following claims are appended to disclose the scope of the invention.

This application claims the benefit of Japanese Patent Application No. 2022-004544 filed January 14, 2022, which is hereby incorporated by reference herein in its entirety.

## Claims

**1.** A power transmitting apparatus for wirelessly transmitting power to a power receiving apparatus, comprising:

first detection means for detecting whether an object different from the power transmitting apparatus and the power receiving apparatus is present based on power loss between the power transmitting apparatus and the power receiving apparatus;
acquisition means for acquiring capability information regarding the power receiving apparatus from the power receiving apparatus;
second detection means for detecting whether an object different from the power transmitting apparatus and the power receiving apparatus is present based on a Q-factor measured during a time period during which the power transmission is stopped;
calculation means for calculating a reference value of power loss when the object different from the power transmitting apparatus and the power receiving apparatus is not present based on a detection result of the second detection means, wherein the reference value is used for the detection performed by the first detection means; and
identification means for identifying a timeout period for processing regarding calculation of the reference value by the calculation means based on the capability information regarding the power receiving apparatus acquired by the acquisition means,
wherein when the power receiving apparatus does not satisfy a predetermined condition, the identification means selects a first value as the timeout period, and
wherein when the power receiving apparatus satisfies the predetermined condition, the identification means selects a second value that is greater than the first value as the timeout period.

**2.** The power transmitting apparatus according to Claim 1, wherein the identification means identifies, as the second value, a value in accordance with the number of trials of the detection process performed by the second detection means.

**3.** The power transmitting apparatus according to Claim 1 or 2, wherein the calculation means calculates the reference value based on a plurality of results of detection performed by the second detection means.

4. The power transmitting apparatus according to any one of Claims 1 to 3, wherein the predetermined condition includes a condition that a version of a specific standard that the power receiving apparatus supports is a predetermined version or higher and a condition that the power receiving apparatus is capable of supporting the process performed by the second detection means.

5. The power transmitting apparatus according to Claim 1 or 2, further comprising:
notification means for notifying the power receiving apparatus of the timeout period identified by the identification means after the timeout period is identified by the identification means and before the calculation means calculates the reference value.

6. The power transmitting apparatus according to any one of Claims 1 to 5, further comprising:
control means for performing control such that if the reference value is not calculated by the calculation means before the timeout period identified by the identification means elapses, power transmission to the power receiving apparatus is stopped or reduced.

7. A power receiving apparatus for wirelessly receiving power from a power transmitting apparatus, the power transmitting apparatus performing a first detection process for detecting whether an object different from the power transmitting apparatus and the power receiving apparatus is present based on power loss between the power transmitting apparatus and the power receiving apparatus and a second detection process for detecting whether an object different from the power transmitting apparatus and the power receiving apparatus is present based on a Q-factor measured during a time period during which power transmission is stopped, the power receiving apparatus comprising:

acquisition means for acquiring capability information regarding the power transmitting apparatus from the power transmitting apparatus;
transmission means for transmitting, to the power transmitting apparatus, information regarding a received power value used by the power transmitting apparatus to calculate a reference value of power loss when an object different from the power transmitting apparatus and the power receiving apparatus is not present based on a detection result of the second detection process, wherein the reference value is used for the detection performed in the first detection process; and
identification means for identifying a maximum transmission period required to transmit the information regarding the received power value by the transmission means based on the capability information regarding the power transmitting apparatus acquired by the acquisition means,
wherein when a predetermined condition is not satisfied between the power transmitting apparatus and the power receiving apparatus, the identification means identifies a first value as the maximum transmission period, and
wherein when the predetermined condition is satisfied between the power transmitting apparatus and the power receiving apparatus, the identification means identifies a second value that is less than the first value as the maximum transmission period.

8. The power receiving apparatus according to Claim 7, wherein the identification means identifies, as the second value, a value in accordance with the number of trials of the second detection process.

9. The power receiving apparatus according to Claim 7 or 8, wherein the predetermined condition includes a condition that a version of a specific standard that the power transmitting apparatus supports is a predetermined version or higher and a condition that the power receiving apparatus is capable of supporting the second detection process performed by the power transmitting apparatus.

10. The power receiving apparatus according to any one of Claims 7 to 9, wherein the transmission means transmits information regarding the maximum transmission period identified by the identification means to the power transmitting apparatus.

11. A wireless power transmission system comprising:

the power transmitting apparatus according to any one of Claims 1 to 6; and
the power receiving apparatus according to any one of claims 7 to 10.

12. A method for controlling a power transmitting apparatus for wirelessly transmitting power to a power receiving apparatus, comprising:

a first detection step of detecting whether an object different from the power transmitting apparatus and the power receiving apparatus is present based on power loss between the power transmitting apparatus and the power receiving apparatus;
an acquisition step of acquiring capability information regarding the power receiving apparatus from the power receiving apparatus;
a second detection step of detecting whether an object different from the power transmitting apparatus and the power receiving apparatus is present based on a Q-factor measured during a time period during which the power transmission is stopped;
a calculation step of calculating a reference value of power loss when an object different from the power transmitting apparatus and the power receiving apparatus is not present based on a detection result in the second detection step, wherein the reference value is used for the detection performed in the first detection step; and
an identification step of identifying a timeout period for processing regarding calculation of the reference value in the calculation step based on the capability information regarding the power receiving apparatus acquired in the acquisition step,
wherein when the power receiving apparatus does not satisfy a predetermined condition, a first value is selected as the timeout period in the identification step, and
wherein when the power receiving apparatus satisfies the predetermined condition, a second value that is greater than the first value is selected as the timeout period in the identification step.

**13.** A method for controlling a power receiving apparatus for wirelessly receiving power from a power transmitting apparatus, the power receiving apparatus performing a first detection process for detecting whether an object different from the power transmitting apparatus and the power receiving apparatus is present based on power loss between the power transmitting apparatus and the power receiving apparatus and a second detection process for detecting whether an object different from the power transmitting apparatus and the power receiving apparatus is present based on a Q-factor measured during a time period during which the power transmission is stopped, the method comprising:

an acquisition step of acquiring capability information regarding the power transmitting apparatus from the power transmitting apparatus;
transmission step of transmitting, to the power transmitting apparatus, information regarding a received power value used by the power transmitting apparatus to calculate a reference value of power loss when an object different from the power transmitting apparatus and the power receiving apparatus is not present based on a detection result of the second detection process, wherein the reference value is used for the detection performed in the first detection process; and
identification step of identifying a maximum transmission period required to transmit the information regarding the received power value in the transmission step based on the capability information regarding the power transmitting apparatus acquired in the acquisition step,
wherein when a predetermined condition is not satisfied between the power transmitting apparatus and the power receiving apparatus, a first value is identified as the maximum transmission period in the identification step, and
wherein when the predetermined condition is satisfied between the power transmitting apparatus and the power receiving apparatus, a second value that is less than the first value is identified as the maximum transmission period in the identification step.

**14.** A program comprising:
program code for causing a computer to operate as the power transmitting apparatus according to any one of Claims 1 to 6.

**15.** A program comprising:
program code for causing a computer to operate as the power receiving apparatus according to any one of Claims 7 to 10.

FIG. 1

100
104
101
POWER
RECEIVING
APPARATUS
103
CHARGING STAND
102
POWER
TRANSMITTING
APPARATUS

FIG. 2

101
201
207
202
RECTIFIER
UNIT
203
VOLTAGE
CONTROL UNIT
205
CHARGING
UNIT
206
BATTERY
208
200
CONTROL UNIT
MEMORY
209
TIMER
210
COMMUNICATION
UNIT
204

FIG. 3

102
302
305
303
301
POWER SUPPLY UNIT
POWER TRANSMISSION UNIT
306
300
304
CONTROL UNIT
307
MEMORY
COMMUNICATION UNIT
308
TIMER

FIG. 4

102
401
COMMUNICATION PROCESSING UNIT
FOREIGN OBJECT DETECTION PROCESSING UNIT
403
402
POWER TRANSMISSION PROCESSING UNIT
TIME SELECTION PROCESSING UNIT
404

FIG. 5

START
RECEIVE END POWER TRANSFER
S501
WAIT UNTIL POWER RECEIVING APPARATUS IS PLACED
(Selection, Ping)
S502
ACQUIRE IDENTIFICATION INFORMATION/CAPABILITY INFORMATION FROM POWER RECEIVING APPARATUS
(I&C)
S503
DETERMINE GP BASED ON REQUEST FROM POWER RECEIVING APPARATUS
(Negotiation)
S504
PERFORM CALIBRATION TIMEOUT PERIOD SELECTION PROCESS
S505
CALCULATE POWER LOSS ESTIMATION VALUE BASED ON CALIBRATION REFERENCE VALUE INFORMATION RECEIVED FROM POWER RECEIVING APPARATUS
(Calibration)
S506
START TRANSMITTING POWER
(Power Transfer)
END

FIG. 6

START
S601
VER.. OF POWER RECEIVING APPARATUS IS PREDETERMINED VALUE OR HIGHER?
NO
YES
S602
Q-VALUE MEASUREMENT METHOD IN TIME DOMAIN IS TO BE PERFORMED?
NO
YES
S603
NUMBER OF TRIALS IS PREDETERMINED NUMBER OR GREATER?
NO
YES
S604
SELECT VALUE GREATER THAN PREDETERMINED VALUE AS TIMEOUT PERIOD
SELECT PREDETERMINED VALUE AS TIMEOUT PERIOD
S605
END

FIG. 7
POWER TRANSMITTING APPARATUS
POWER RECEIVING APPARATUS
F701 Analog Ping
F701
PLACED F702
F703 Analog Ping
F704 DETECT PLACEMENT
F705 Digital Ping
DETECT PLACEMENT F706
F707 EXCHANGE IDENTIFICATION INFORMATION AND CAPABILITY INFORMATION
F708 DETERMINE GP (= 15 WATTS)
F709 SUPPLEMENTARY INFORMATION (Q-VALUE MEASUREMENT IN TIME DOMAIN ENABLED)
F710 ACK
F711 NUMBER OF TRIALS (7)
F712 SELECT CALIBRATION TIMEOUT PERIOD
F713 CE(+)
F714 RP/1
F715 PERFORM FOREIGN OBJECT DETECTION PROCESS
F716 MAKE NO DETERMINATION
F717 DETERMINE THAT NO TIMEOUT HAS OCCURRED
× 5
F718 RP/1
F719 PERFORM FOREIGN OBJECT DETECTION PROCESS
F720 ACK
F721 DETERMINE THAT NO TIMEOUT HAS OCCURRED
F722 CE(+)
F723 RP/2
F724 PERFORM FOREIGN OBJECT DETECTION PROCESS
F725 MAKE NO DETERMINATION
F726 DETERMINE THAT NO TIMEOUT HAS OCCURRED
× 5
F727 RP/2
F728 PERFORM FOREIGN OBJECT DETECTION PROCESS
F729 ACK
F730 DETERMINE THAT NO TIMEOUT HAS OCCURRED
F731 POWER TRANSMISSION AND RECEPTION PROCESS
PREDETERMINED TIMEOUT PERIOD
SELECTED TIMEOUT PERIOD

FIG. 8

START
RECEIVE END POWER TRANSFER
S801
WAIT UNTIL BEING PLACED ON POWER TRANSMITTING APPARATUS (Selection, Ping)
S802
SEND IDENTIFICATION INFORMATION/CAPABILITY INFORMATION TO POWER TRANSMITTING APPARATUS (I&C)
S803
NEGOTIATE WITH POWER TRANSMITTING APPARATUS TO DETERMINE GP (Negotiation)
S804
PERFORM MAXIMUM RP PACKET TRANSMISSION TIME INTERVAL SELECTION PROCESS
S805
SEND CALIBRATION REFERENCE VALUE INFORMATION TO POWER TRANSMITTING APPARATUS (Calibration)
S806
START RECEIVING POWER (Power Transfer)
END

FIG. 9

START
S901
VER.. OF POWER TRANSMITTING APPARATUS IS PREDETERMINED VALUE OR HIGHER?
NO
YES
S902
Q-VALUE MEASUREMENT METHOD IN TIME DOMAIN IS TO BE PERFORMED?
NO
YES
S903
NUMBER OF TRIALS IS PREDETERMINED NUMBER OR GREATER?
NO
YES
S904
SELECT VALUE LESS THAN PREDETERMINED VALUE AS MAXIMUM TRANSMISSION TIME INTERVAL
SELECT PREDETERMINED VALUE AS MAXIMUM TRANSMISSION TIME INTERVAL
S905
END

FIG. 10
POWER TRANSMITTING APPARATUS
POWER RECEIVING APPARATUS
F1001
Analog Ping
F1001
PLACED
F1002
F1003
Analog Ping
F1004
DETECT PLACEMENT
F1005
Digital Ping
DETECT PLACEMENT
F1006
F1007
EXCHANGE IDENTIFICATION INFORMATION AND CAPABILITY INFORMATION
F1008
DETERMINE GP (= 15 WATTS)
SUPPLEMENTARY INFORMATION (Q-VALUE MEASUREMENT IN TIME DOMAIN ENABLED)
F1009
ACK
F1010
NUMBER OF TRIALS (7)
F1011
SELECT MAXIMUM RP PACKET TRANSMISSION TIME INTERVAL
F1012
CE(+)
F1013
RP/1
F1014
F1015
PERFORM FOREIGN OBJECT DETECTION PROCESS
MAKE NO DETERMINATION
F1016
F1017
DETERMINE THAT NO TIMEOUT HAS OCCURRED
× 5
RP/1
F1018
F1019
PERFORM FOREIGN OBJECT DETECTION PROCESS
ACK
F1020
F1021
DETERMINE THAT NO TIMEOUT HAS OCCURRED
CE(+)
F1022
RP/2
F1023
F1024
PERFORM FOREIGN OBJECT DETECTION PROCESS
MAKE NO DETERMINATION
F1025
F1026
DETERMINE THAT NO TIMEOUT HAS OCCURRED
× 5
RP/2
F1027
F1028
PERFORM FOREIGN OBJECT DETECTION PROCESS
ACK
F1029
F1030
DETERMINE THAT NO TIMEOUT HAS OCCURRED
F1031
POWER TRANSMISSION AND RECEPTION PROCESS
PREDETERMINED MAXIMUM TRANSMISSION TIME INTERVAL
SELECTED MAXIMUM TRANSMISSION TIME INTERVAL

FIG. 11

1101
1104
Pr2
1103
Pr3
1102
1100
1108
1106
Pr1
1105
1107
RECEIVED POWER
Pt1
Pt3
Pt2
Pt2'
TRANSMITTED POWER

# FIG. 12A

$T_0$
1200
1201 ($T_1$, $A_1$)
1202 ($T_2$, $A_2$)
VOLTAGE VALUE A
TIME T


# FIG. 12B

$T_0$
$T_5$
1203
1204 ($T_3$, $A_3$)
1205 ($T_4$, $A_4$)
VOLTAGE VALUE A
TIME T

**INTERNATIONAL SEARCH REPORT**

International application No.
**PCT/JP2022/048455**

**A. CLASSIFICATION OF SUBJECT MATTER**

***H02J 50/60***(2016.01)i; ***H02J 7/00***(2006.01)i; ***H02J 50/12***(2016.01)i; ***H02J 50/20***(2016.01)i; ***H02J 50/30***(2016.01)i; ***H02J 50/80***(2016.01)i
FI: H02J50/60; H02J50/80; H02J50/12; H02J7/00 301D; H02J50/20; H02J50/30

According to International Patent Classification (IPC) or to both national classification and IPC

**B. FIELDS SEARCHED**

Minimum documentation searched (classification system followed by classification symbols)

H02J50/60; H02J7/00; H02J50/12; H02J50/20; H02J50/30; H02J50/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/161776 A1 (CANON KABUSHIKI KAISHA) 19 August 2021 (2021-08-19) entire text, all drawings | 1-15 |
| A | WO 2021/199774 A1 (CANON KABUSHIKI KAISHA) 07 October 2021 (2021-10-07) entire text, all drawings | 1-15 |
| A | JP 2021-502047 A (LG INNOTEK CO., LTD.) 21 January 2021 (2021-01-21) entire text, all drawings | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/048455**

| Patent document cited in search report | Publication date (day/month/year) | Patent family member(s) | Publication date (day/month/year) |
|---|---|---|---|
| WO 2021/161776 A1 | 19 August 2021 | JP 2021-129410 A | |
| | | CN 115088157 A | |
| | | KR 10-2022-0133983 A | |
| WO 2021/199774 A1 | 07 October 2021 | JP 2021-164282 A | |
| | | CN 115398773 A | |
| JP 2021-502047 A | 21 January 2021 | US 2020/0343765 A1 | |
| | | entire text, all drawings | |
| | | US 2022/0368157 A1 | |
| | | WO 2019/088760 A1 | |
| | | KR 10-2019-0050301 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015056959 A
- JP 2017070074 A
- JP 2018045845 A
- JP 2022004544 A